(19) Europäisches Patentamt
European Patent Office
Office européen des brevets

(11) **EP 4 000 005 B1**

(12) **EUROPÄISCHE PATENTSCHRIFT**

(45) Veröffentlichungstag und Bekanntmachung des Hinweises auf die Patenterteilung:
**13.05.2026 Patentblatt 2026/20**

(21) Anmeldenummer: **20737165.9**

(22) Anmeldetag: **07.07.2020**

(51) Internationale Patentklassifikation (IPC):
**G06V 10/75** *(2022.01)* **G06V 10/44** *(2022.01)*
**G06T 7/33** *(2017.01)*

(52) Gemeinsame Patentklassifikation (CPC):
**G06T 7/337; G06V 10/36; G06V 10/44; G06V 10/757**

(86) Internationale Anmeldenummer:
**PCT/EP2020/069050**

(87) Internationale Veröffentlichungsnummer:
**WO 2021/008926 (21.01.2021 Gazette 2021/03)**

(54) **VERFAHREN ZUM ERMITTELN EINER POSITION EINES ERSTEN BILDBEREICHS IN EINEM KORRESPONDENZ-BILD, SOC UND STEUERVORRICHTUNG UND SYSTEM ZUR DURCHFÜHRUNG DES VERFAHRENS, SOWIE COMPUTERPROGRAMM**

METHOD FOR DETERMINING THE POSITION OF A FIRST IMAGE REGION IN A CORRESPONDENCE IMAGE, SOC AND CONTROL DEVICE, AND SYSTEM FOR CARRYING OUT THE METHOD, AND COMPUTER PROGRAM

PROCÉDÉ DE DÉTERMINATION D'UNE POSITION D'UNE PREMIÈRE ZONE D'IMAGE DANS UNE IMAGE DE CORRESPONDANCE, SYSTÈME SUR PUCE, ET DISPOSITIF DE COMMANDE ET SYSTÈME POUR L'EXÉCUTION DU PROCÉDÉ, AINSI QUE PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2019 DE 102019210580**

(43) Veröffentlichungstag der Anmeldung:
**25.05.2022 Patentblatt 2022/21**

(73) Patentinhaber: **Robert Bosch GmbH 70442 Stuttgart (DE)**

(72) Erfinder: **SIMON, Stephan 31079 Sibbesse (DE)**

(56) Entgegenhaltungen:
**WO-A2-2005/048195 DE-A1- 102010 006 522 DE-B3- 10 356 090**

EP 4 000 005 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Ermitteln eines ersten Bildbereichs in einem Korrespondenz-Bild. Ferner betrifft die Erfindung ein System-on-a-Chip (SoC) und eine Steuervorrichtung zur Durchführung des Verfahrens. Die Erfindung betrifft auch ein System, ein computerlesbares Speichermedium und ein Computerprogramm, die jeweils dazu eingerichtet sind, die vorgeschlagenen Verfahren auszuführen.

Stand der Technik

Aus dem Stand der Technik sind unterschiedliche Möglichkeiten bekannt, eine Position eines ersten Bildbereichs in einem Korrespondenz-Bild zu ermitteln, beispielsweise sogenanntes "Block-Matching". Dabei wird der erste Bildbereich mit allen in Frage kommenden gleich großen zweiten Bildbereichen aus dem Korrespondenz-Bild verglichen. Bei jedem dieser Vergleiche werden alle Pixelpaare verglichen. Jeder Vergleich bewertet dabei eine Ähnlichkeit bzw. einen Unterschied der jeweils betrachteten Pixel, beispielsweise eine absolute Differenz von Grauwerten. Durch Aufsummieren der absoluten Differenzen ergibt sich eine Bewertungszahl für jeden in Betracht kommenden zweiten Bildbereich, wobei die Summe umso größer ist, je größer der Unterschied zwischen den Bildbereichen ist. Block-Matching ist sehr rechenaufwändig, denn der Rechenaufwand wächst sowohl mit den Dimensionen des ersten Bildbereichs als auch mit den Dimensionen des Korrespondenz-Bildes. Ferner ist Block-Matching nicht sehr zuverlässig, da das Ergebnis nicht sehr diskriminativ ist, d.h. es ist kein klares Extremum und damit keine eindeutige Position ermittelbar.

**Geänderte Beschreibungsseite 2 - Reinfassung**

Eine weitere Möglichkeit besteht im sogenannten "Merkmalsvergleich", d.h. dem Vergleich mindestens eines Merkmals, das aus dem ersten Bildbereich extrahiert wurde, mit Merkmalen, die aus dem Korrespondenz-Bild extrahiert wurden. Dabei werden als Signatur bezeichnete Folgen von Binärwerten erzeugt, die entsprechende Bildbereiche charakterisieren. Dem Ansatz liegt dabei die Annahme zu Grunde, dass eine ähnliche Signatur von Bildbereichen auf ähnliche Bildbereiche schließen lässt. Der Vergleich der Signaturen erfolgt dann durch Bit-weisen Vergleich der ersten Signatur mit der zweiten Signatur (XOR-Vergleich) und Zählen der Bits, die sich unterscheiden. Je geringer das Ergebnis, umso höher die Übereinstimmung der Bildbereiche. Allerdings kann auch der Vergleich der Signaturen aufwändig sein, da pro möglicher Position im Korrespondenz-Bild ein Vergleich der Signaturen erforderlich ist, wobei jeweils zwei Signaturen (beispielsweise von 256 Bit Länge) bit-weise verglichen werden müssen. Ferner kann auch hier das Problem bestehen, dass das Ergebnis des Merkmalsvergleichs nicht ausreichend diskriminativ ist.

Die Schrift DE 103 51 778 A1 offenbart ein Verfahren zur Verarbeitung von Bilddaten bewegter Szenarien. Dazu werden in einzelnen zeitlich aufeinander folgenden Bilddatensätzen miteinander korrespondierende Bildpunkte bzw. Bildbereiche identifiziert.

Aus der WO 2005/048195 A2 ist eine Verarbeitung von Bilddaten bewegter Szenarien, insbesondere um darin befindliche Objekte zu erkennen und zu verfolgen (Tracking), bekannt. Hierfür ist es notwendig, in den einzelnen zeitlich aufeinanderfolgenden Bilddatensätze miteinander korrespondierende Bildpunkte bzw. Bildbereiche zu identifizieren.

DE 10 2010 006522 A1 beschreibt ein Verfahren zur Analyse von korrespondierenden Bildpunkten (B1, B2) in zumindest zwei Bilddatensätzen, bei dem Signaturinformationen für jeden Bildpunkt (B 1, B2) der Bilddatensätze ermittelt werden, wobei zur Ermittlung korrespondierender Bildpunkte (B1, B2) für in beiden Bilddatensätzen übereinstimmende Signaturinformationen eine Korrespondenzhypothese erstellt wird.

**Geänderte Beschreibungsseite 2a - Reinfassung**

In der DE 103 56 090 B3 wird ein Verfahren zur rechnergestützten Ermittlung von Bildbereichen in einem digitalisierten Bild offenbart, bei dem ein erster Bildbereich (B1) in einem Referenzbild (RB) mit mehreren zweiten Bildbereichen (B2) in einem Suchbereich (S) eines Suchbilds (SB) verglichen wird und als Ergebnis ein zweiter Bildbereich (B2) ermittelt wird, der die höchste Übereinstimmung mit dem ersten Bildbereich (B1) aufweist, und bei dem der ermittelte zweite Bildbereich (B2) markiert wird, falls der ermittelte zweite Bildbereich (B2) am Rand des Suchbereichs (S) liegt.

Offenbarung der Erfindung

Die Erfindung betrifft in einem ersten Aspekt ein Verfahren zum Ermitteln einer Position eines ersten Bildbereichs in einem Korrespondenz-Bild entsprechend dem Anspruch 1.

Die Erfindung löst das Problem des Auffindens einer Position eines ersten Bildbereichs in einem Korrespondenz-Bild. Diese Aufgabe tritt in den Bereichen der Bildverarbeitung, der Bildanalyse, des maschinellen Sehens, der Computer Vision, usw. häufig auf. Beispielsweise kann das erfindungsgemäße Verfahren für folgende Anwendungen verwendet werden:

- Indirektes Messen von Abständen, wobei mittels eines handgehaltenen Laserentfernungsmessgeräts nacheinander Distanzen zu zumindest zwei entfernten Punkten gemessen werden. Das Laserentfernungsmessgeräts ermittelt aus den beiden Entfernungen und jeweils synchron dazu aufgezeichneten Kamerabildern indirekt die Entfernung zwischen den beiden Punkten und gibt diese aus. Dabei ist es nach erfindungsgemäßem Verfahren möglich, den beim Anvisieren des ersten Messpunkts erfassten ersten Bildbereich im beim Anvisieren des zweiten Messpunkts erfassten Korrespondenz-Bild wiederzufinden und dessen Position zu bestimmen. Hierdurch wird ermöglicht, einen durch Translation und/oder Rotation des handgehaltenen Laserentfernungsmessgeräts hervorgerufenen Fehler zu kompensieren, sodass ein Stativ überflüssig wird. Einem Fachmann ist zu diesem Messprinzip die DE 10 2018 201 692 A1 bekannt.
- Verfolgen eines stationären Objekts, während sich eine Kamera an dem Objekt vorbei bewegt. Beispielsweise kann derart ein Verkehrszeichen im Straßenverkehr beim Vorbeifahren verfolgt werden. Diese Möglichkeit wird genutzt, um mehrere Beobachtungen desselben Verkehrszeichens zu erhalten, die unterschiedliche Größe bzw. Auflösung besitzen, und somit ein zuverlässigeres Lesen des Verkehrszeichens zu ermöglichen.
- Verfolgen eines bewegten Objekts mittels einer Kamera, beispielsweise eines Fußgängers in einer Sequenz von Kamerabildern einer bewegten Kamera in einem Fahrzeug oder im Rahmen von Überwachungskameras.
- Sukzessive Auswertung von Bildverschiebungen im Rahmen der Navigation von autonomen Robotern, die bei ihrer Fahrt relativ zu einem Untergrund (beispielsweise Beton oder Rasen) Bilder mittels einer zum Boden gerichteten Kamera von diesem Untergrund aufnehmen, wobei eine präzise Lokalisation des autonomen Roboters ermöglicht wird.

Das Verfahren ist in einer Ausführungsform ausschließlich in Hardware, insbesondere in Form eines System-on-a-Chip (SoC) implementiert.

In einer alternativen Ausführungsform ist das Verfahren auch in Form von Software oder in einer Mischung aus Software und Hardware realisiert. Insbesondere ist das Verfahren ein computerimplementiertes Verfahren, das mittels einer Steuervorrichtung, beispielsweise einer Prozessorvorrichtung von einer Computervorrichtung, durchgeführt wird. Zur Durchführung des Verfahrens weist die Steuervorrichtung ferner zumindest eine Speichervorrichtung auf, in der das Verfahren als maschinenlesbares Computerprogramm hinterlegt ist.

Unter "bereitstellen" ist insbesondere zu verstehen, dass einer das Verfahren durchführenden Vorrichtung, insbesondere einer Steuervorrichtung oder einem SoC, die entsprechende Information - hier zumindest ein erster Bildbereich und ein Korrespondenz-Bild - zur weiteren Verarbeitung übermittelt wird. In einer Ausführungsform des Verfahrens kann die entsprechende Information durch Einlesen von entsprechenden Daten aus einer Datei, beispielsweise durch Einlesen von auf einem Datenserver hinterlegten Daten, erfolgen. In einer wiederum alternativen oder zusätzlichen Ausführungsform des Verfahrens können ein erster Bildbereich und/oder ein Korrespondenz-Bild unter Verwendung zumindest einer bildgebenden Sensorvorrichtung erfasst und bereitgestellt werden. Insbesondere ist eine

Bereitstellung unter Verwendung einer optischen Kamera, beispielsweise einer visuellen Kamera und/oder einer Wärmebildkamera, oder unter Verwendung eines anderweitigen bildgebenden Sensors denkbar - beispielsweise unter Verwendung eines Radar-Sensors, NMR-Sensors, 3D-Time-of-Flight-Sensors oder dergleichen. Ferner ist denkbar, dass ein erster Bildbereich unter Verwendung einer ersten bildgebenden Sensorvorrichtung, insbesondere einer ersten Kamera, und ein Korrespondenz-Bild unter Verwendung einer zweiten bildgebenden Sensorvorrichtung, insbesondere einer zweiten Kamera bereitgestellt wird. Insbesondere sind erste bildgebende Sensorvorrichtung und zweite bildgebende Sensorvorrichtung vom gleichen Typ (beispielsweise visuelle Kameras). Zwischen den beiden Sensorvorrichtungen kann ein definierter (insbesondere fester) geometrischer Bezug bestehen. Alternativ oder zusätzlich ist denkbar, dass sowohl erster Bildbereich als auch Korrespondenz-Bild unter Verwendung derselben Sensorvorrichtung bereitgestellt werden. Beispielsweise ist eine Erfassung und Bereitstellung durch dieselbe Sensorvorrichtung zu unterschiedlichen Zeitpunkten und/oder aus unterschiedlichen Perspektiven denkbar.

Die Erfindung betrifft das effiziente Auffinden eines ersten Bildbereichs, insbesondere eines ersten Bildbereichs aus einem Ausgangsbild, in einem Korrespondenz-Bild. Das Korrespondenz-Bild kann dabei ein weiteres Bild oder auch das Ausgangsbild selbst darstellen. Sofern der erste Bildbereich zu zumindest einem zweiten Bildbereich in dem Korrespondenz-Bild korrespondiert, lässt sich der erste Bildbereich auffinden. Das Auffinden umfasst das Ermitteln einer Position des ersten Bildbereichs in dem Korrespondenz-Bild. Unter "Ermitteln einer Position" ist dabei zu verstehen, dass der erste Bildbereich durch Angabe einer Position - beispielsweise in Form von Pixelkoordinaten - eindeutig in dem Korrespondenz-Bild auffindbar ist. Das Verfahren wird auch als "Korrespondenzfindung" bezeichnet. Der erste Bildbereich kann dabei deutlich kleiner sein als das Korrespondenz-Bild. So ist denkbar, die Position eines beispielsweise $41 \times 51$ Pixel umfassenden ersten Bildbereichs in einem $2560 \times 1440$ Pixel umfassenden Korrespondenz-Bild zu ermitteln. Insbesondere ist es auch möglich, die Position eines einzelnen Bildpunkts (Pixel) in dem Korrespondenz-Bild zu ermitteln, wobei für die Durchführung des erfindungsgemäßen Verfahrens dennoch ein erster Bildbereich verwendet wird, wobei der erste Bildbereich eine, insbesondere kleine, Umgebung des Bildpunkts beinhaltet.

Der erste Bildbereich und das Korrespondenz-Bild umfassen eine Mehrzahl an Bildpositionen, die mit $(x_i,y_i)$ im ersten Bildbereich und mit $(u_j,v_j)$ im Korrespondenz-Bild bezeichnet werden können. Die Bildpositionen können dabei insbesondere durch eine Pixel-Auflösung des ersten Bildbereichs bzw. des Korrespondenz-Bilds definiert sein. Alternativ sind auch anderweitige signaltechnische Untergliederungen des ersten Bildbereichs bzw. des Korrespondenz-Bilds in unterscheidbare Bildpositionen denkbar. Insbesondere ist möglich, dass auf eine signaltechnsiche Untergliederung des ersten Bildbereichs bzw. des Korrespondenz-Bilds eine Transformation (beispielsweise eine Skalierung, Drehung, sog. Warping (insbesondere Bildentzerrung zur Objektivkorrektur) oder dergleichen) angewandt wird. Ferner kann sich eine signaltechnische Untergliederung bereits durch die Sensorvorrichtung ergeben, beispielsweise im Falle eines Detektions-Arrays wie im Falle eines ‚Phased Array Radars'.

Der erste Bildbereich umfasst zumindest eine Referenzposition (beispielsweise bezeichenbar als $(x_r,y_r)$), auf die sich die Ermittlung der Position des ersten Bildbereichs im Korrespondenz-Bild bezieht. Wenn beispielsweise ermittelt wird, dass der erste Bildbereich sich im Referenz-Bild an Position $(x_0,y_0)$ findet, so findet sich tatsächlich die Referenzposition des ersten Bildbereichs an dieser Stelle. Die Referenzposition kann prinzipiell beliebig gewählt sein. Insbesondere ist die Referenzposition als ein Pixel des ersten Bildbereichs gewählt. Beispielsweise kann die Referenzposition als die geometrische Mitte des ersten Bildbereichs gewählt sein. Alternativ kann die Referenzposition auch als ein Eckpunkt oder ein anderweitig markanter Punkt des ersten Bildbereichs gewählt sein - beispielsweise abhängig von der Geometrie des ersten Bildbereichs. Es ist ebenfalls denkbar, dass die Referenzposition nicht an einer ganzzahligen Pixelposition liegt, da diese prinzipiell auch an einer beliebigen (beispielsweise berechneten) Position zwischen den Pixeln liegen kann. Es sei angemerkt, dass sich eine beliebige Bildposition $(x_i,y_i)$ im ersten Bildbereich bezüglich der Referenzposition durch einen relativen Versatz $(\Delta x_i, \Delta y_i)$ beschreiben lässt. Der Ausdruck $(\Delta x_i, \Delta y_i)$ schließt dabei die Beschreibung des Versatzes in unterschiedlichen Koordinatensystemen, beispielsweise in kartesischen und nicht-kartesischen (z.B. Polarkoordinaten) Koordinatensystemen, ausdrücklich ein. Ferner kann sich auch die Bildung einer Signatur einer Bildposition in dem ersten Bildbereich auf die Referenzposition beziehen (Erläuterung siehe unten).

In einer Ausführungsform des Verfahrens kann vorgesehen sein, den ersten Bildbereich und/oder das Korrespondenz-Bild nach deren Bereitstellung zunächst anzupassen, insbesondere zu filtern, zu glätten, (linear oder nichtlinear) in Grauwertbilder zu transformieren, zu skalieren, zu drehen, zu verzerren, eine Auflösung zu verändern oder dergleichen.

Erfindungsgemäß werden in einem Verfahrensschritt eine Mehrzahl von Signaturwerten $s_i$ zu verschiedenen Bildpositionen $(x_i,y_i)$ im ersten Bildbereich ermittelt. Ein Signaturwert (auch als Signatur bekannt) bezeichnet dabei insbesondere ein aus Daten eines bereitgestellten Bildes (oder Bildbereichs) für eine (gewählte oder definierte) Bildposition $(x_i,y_i)$ ermitteltes Merkmal, das eine Umgebung der zugehörigen Bildposition $(x_i,y_i)$ charakterisiert. Somit weisen zu Bildpositionen ermittelte Signaturwerte eine, insbesondere feste, Zuordnung zu der entsprechenden Bildposition, insbesondere zu Koordinaten dieser Bildposition, auf. Die Signaturwerte charakterisieren die jeweils zugeordneten Bildpositionen durch eine rechnerische Umgebungsbeschreibung der zugeordneten Bildposition. Bevorzugt werden die Signaturwerte jeweils durch eine oder mehrere einfache Rechenoperationen aus den benachbarten Dateninhalten (insbesondere Bildinformationen bzw. Bilddaten) der zugeordneten Bildposition ermittelt, beispielsweise durch mehrfache, insbesondere gewichtete, Differenzbildung und/oder Summation mehrerer Grauwerte unmittelbar benachbarter oder in der Nähe liegender Bildpositionen. Bei gewichteter Differenzbildung können die Gewichte von dem relativen Versatz abhängen. Die Bildung von derartigen Signaturen, insbesondere unterschiedliche Verfahren zur Erzeugung oder Ermittlung derartiger Signaturwerte, ist dem Fachmann hinreichend bekannt, beispielsweise unter Abkürzungen wie "Scale-invariant feature transform (SIFT)", "Speeded Up Robust Features (SURF)", "Binary Robust Independent Elementary Features (BRIEF)", "Oriented FAST and Rotated BRIEF (ORB)" oder dergleichen. In einem Ausführungsbeispiel kann ein Signaturwert aus dem ersten Bildbereich gebildet werden, indem für zwei in vorgegebener relativer Anordnung innerhalb des Bildbereichs befindliche Pixel geprüft wird, welcher der beiden Grauwerte größer ist, und das Ergebnis mit 0 oder 1 binär codiert wird. Diese Prüfung wird für eine Anzahl weiterer Pixelpaare wiederholt und somit eine Folge von Binärwerten, beispielsweise bestehend aus insbesondere 8, 16 oder 24 Bit, erzeugt. Diese Folge von Binärwerten charakterisiert den Bildbereich und wird als Signaturwert (oder auch als Signatur) bezeichnet. Der Signaturwert kann auch als Dezimalzahl aufgefasst werden. Prinzipiell liegt dem Ansatz der Ermittlung einer Position des ersten Bildbereichs im Korrespondenz-Bild mit Signaturwerten die Annahme zu Grunde, dass ein ähnlicher Signaturwert des ersten Bildbereichs auf einen ähnlichen Bildbereich des Korrespondenz-Bild schließen lässt und umgekehrt. Dabei kann ein Vergleich von Signaturwerten insbesondere durch Bit-weisen Vergleich (XOR-Vergleich) und Zählen der Bits, die sich unterscheiden, erfolgen (in diesem Falle wird also wobei eine Unähnlichkeit gemessen).

Erfindungsgemäß wird nicht nur für die Referenzposition ein Signaturwert gebildet, sondern für eine Mehrzahl von Bildpositionen im ersten Bildbereich. Beispielsweise werden Signaturwerte für alle durch Pixel definierten Bildpositionen im ersten Bildbereich ermittelt, insbesondere für mehr als 90 %, mehr als 75 %, mehr als 50 % oder ganz insbesondere für mehr als 30 % aller durch Pixel definierten Bildpositionen im ersten Bildbereich. Die Mehrzahl von Signaturwerten $s_i$ zu verschiedenen Bildpositionen $(x_i,y_i)$ im ersten Bildbereich kann in Form einer Matrix oder Tabelle oder in Form eines Signaturwertbildes ermittelt werden. Die Matrix wird dabei als erste Signaturwertmatrix bezeichnet. Dabei wird einer entsprechenden Bildposition $(x_j, y_j)$ ein Signaturwert si zugeordnet. Dabei kann die Matrix oder Tabelle oder das Signaturwertbild die gleiche Dimension aufweisen wie der erste Bildbereich.

In einer Ausführungsform des Verfahrens ist denkbar, Mehrdeutigkeiten in der Mehrzahl der ermittelten Signaturwerte $s_i$ durch Löschen und/oder durch Zusammenfassen der mehrdeutigen Signaturwerte $s_i$ zu beheben. Beim Löschen mehrdeutiger Signaturwerte $s_i$ werden diese somit von Durchführung des weiteren Verfahrens ausgeschlossen. Das Löschen von Mehrdeutigkeiten ermöglicht die Bereitstellung eines besonders einfachen Verfahrens, wobei allerdings Informationen verloren gehen. Ein Zusammenfassen von Mehrdeutigkeiten kann insbesondere durch ein gewichtetes Mitteln von relativen Versatzen erfolgen.

In einem Verfahrensschritt werden relative Versatze $(\Delta x_i, \Delta y_i)$ einer Mehrzahl von Bildpositionen $(x_i, y_i)$ im ersten Bildbereich zu den jeweilig ermittelten Signaturwerten $s_i$ zugeordnet. Insbesondere können die relativen Versatze $(\Delta x_i, \Delta y_i)$ einer Mehrzahl von Bildpositionen $(x_i, y_i)$ im ersten Bildbereich zu jeweilig ermittelten Signaturwerten $s_i$ in einer Zuordnungsvorschrift, insbesondere in einer Lookup-Tabelle, zugeordnet werden. Dabei ist denkbar, einen jeweiligen relativen Versatz $(\Delta x_i, \Delta y_i)$ einer Bildposition $(x_i, y_i)$ bezüglich der Referenzposition aus einer Matrix von relativen Versatzen $(\Delta x_i, \Delta y_i)$ zu ermitteln. Dabei können die relativen Versatze insbesondere fest und unveränderlich vorgesehen bzw. gespeichert sein.

In einer Ausführungsform des Verfahrens wird unter Verwendung eines jeweiligen Signaturwerts $s_i$ eine Adresse der Zuordnungsvorschrift, insbesondere der Lookup-Tabelle, festgelegt. Derart kann anhand der Signaturwerte eine besonders effiziente und speicherplatzsparende Zuordnung in der Zuordnungsvorschrift vorgenommen werden, wobei durch einen jeweiligen Signaturwert eine Adresse festgelegt ist, an der eine zugehörige Eintragung (d.h. zumindest ein relativer Versatz $(\Delta x_i, \Delta y_i)$) zu finden ist. In einem Ausführungsbeispiel hat die Zuordnungsvorschrift, beispielsweise die Lookup-Tabelle, eine Anzahl von Adressen, die der Anzahl von eindeutigen (insbesondere möglichen bzw. darstellbaren) Signaturwerten entspricht. Beispielsweise gibt es bei einer Signaturlänge von n Bit $2^n$ Adressen. Da die Adressen selbst keinen Speicherplatz benötigen - da sie nur implizit und fest in aufsteigender Reihenfolge in einer Speicherzuordnung vorhanden sein zu brauchen - kann vorteilhafterweise ein besonders ressourcenschonendes Verfahren angegeben werden.

Das erfindungsgemäße Verfahren umfasst ferner einen Verfahrensschritt, in dem eine Mehrzahl von Korrespondenz-Signaturwerten $s_j$ zu verschiedenen Bildpositionen $(u_j, v_j)$ im Korrespondenz-Bild ermittelt werden. Es gelten die gleichen Ausführungen wie oben zu Signaturwerten und Bildpositionen des ersten Bildbereichs. Insbesondere charakterisiert ein Korrespondenz-Signaturwert $s_j$ eine Umgebung einer Bildposition $(u_j, v_j)$ im Korrespondenz-Bild. Insbesondere wird ein Korrespondenz-Signaturwert $s_j$ zu einer Bildposition $(u_j, v_j)$ im Korrespondenz-Bild analog gebildet, insbesondere nach derselben Vorschrift gebildet, wie ein Signaturwert $s_i$ zu einer Bildposition $(x_i, y_i)$ im ersten Bildbereich. Ferner kann die Mehrzahl von Korrespondenz-Signaturwerten $s_j$ zu verschiedenen Bildpositionen $(u_j, v_j)$ des Korrespondenz-Bildes in Form einer Matrix oder Tabelle oder eines Korrespondenz-Signaturwertbildes ermittelt werden. Die Matrix wird dann als zweite Signaturwertmatrix bezeichnet. Dies ist insbesondere in einer Software-Implementierung denkbar. Alternativ ist auch denkbar, auf eine (auch vorübergehende) Speicherung einzelner Korrespondenz-Signaturwerte $s_j$ zu verzichten und die Korrespondenz-Signaturwerte $s_j$ unmittelbar dann zu verarbeiten, wenn sie ermittelt wurden. Insbesondere in einer Hardware-Implementierung des erfindungsgemäßen Verfahrens - beispielsweise in einem SoC - ist es daher möglich, eine besonders speicherplatzreduzierte und somit ressourcenschonende Realisierung anzugeben.

In einer Ausführungsform des Verfahrens weisen ein Signaturwert $s_i$ und ein Korrespondenz-Signaturwert $s_j$ eine vorgegebene Länge von 24 Bit oder weniger auf, insbesondere von 16 Bit oder weniger, ganz insbesondere von 8 Bit oder weniger. Auf diese Weise kann die Anzahl an Rechenoperationen beziehungsweise die Rechenzeit zur Ermittlung der Signaturwerte reduziert werden. Ferner kann die Größe der Zuordnungsvorschrift, insbesondere der Lookup-Tabelle, sehr klein werden, da deren Größe exponentiell (s.o. $2^n$) mit der Anzahl an Bits n wächst. In einem Ausführungsbeispiel ist ein Signaturwert der Länge 10 Bit implementiert.

Mit den vorliegenden Korrespondenz-Signaturwert $s_j$ lassen sich anschließend relative Versatze $(\Delta u_j, \Delta v_j)$ zu ermittelten Korrespondenz-Signaturwerten $s_j$ unter Verwendung der zuvor aufgestellten Zuordnung ermitteln. Dazu wird insbesondere der dem Korrespondenz-Signaturwert $s_j$ entsprechende Eintrag in der Zuordnungsvorschrift, d.h. durch Aufsuchen der auf dem Korrespondenz-Signaturwert $s_j$ basierenden Andresse, ausgelesen.

Wurden die Versatze ermittelt, lassen sich wiederum Zielpositionen $(\Delta u_j + u_j, \Delta v_j + v_j)$ in dem Korrespondenz-Bild berechnen. Eine jeweilige Zielposition bestimmt die Bildposition der Referenzposition im Korrespondenz-Bild, ausgehend von unterschiedlichen Korrespondenz-Signaturen. Die Berechnung erfolgt durch Kompensation des Versatzes (d.h. bei vorliegender Definition des Versatzes durch Addition) des relativen Versatzes $(\Delta u_j, \Delta v_j)$ und jeweiliger, zum Korrespondenz-Signaturwert $s_j$ gehörender, Bildposition $(u_j, v_j)$. In einer Ausführungsform des Verfahrens werden Korrespondenz-Signaturwerte für alle durch Pixel definierten Bildpositionen im Korrespondenz-Bild ermittelt. In einer alternativen Ausführungsform des Verfahrens werden für mehr als 90 %, für mehr als 75 %, für mehr als 50 % oder ganz insbesondere für mehr als 30 % aller durch Pixel definierten Bildpositionen im Korrespondenz-Bild Korrespondenz-Signaturwerte ermittelt.

Unter "inkrementellem Zuordnen eines Wichtungswerts w" ist insbesondere zu verstehen, dass zu einer berechneten Zielposition ein Wichtungswert w inkrementell (d.h. additiv) zugeordnet wird. Ist der Zielposition bereits ein Wichtungswert zugeordnet, erhöht sich dieser um den neu zugeordneten Wichtungswert w zum inkrementellen Wichtungswert w'. Dabei können die Wichtungswerte w zu Zielpositionen im Korrespondenz-Bild in Form einer Matrix oder Tabelle zugeordnet werden. Die Matrix wird auch als Abstimmungsmatrix bezeichnet. In einem weiteren Verfahrensschritt wird die Position $(u_0,v_0)^*$ des ersten Bildbereichs in dem Korrespondenz-Bild durch Auffinden eines Extremums, insbesondere eines Maximums, in den inkrementellen Wichtungswerten w' ermittelt. Es kann vorgesehen sein, die ermittelten inkrementellen Wichtungswerte w' noch aufzubereiten, beispielsweise durch Filtern und/oder Glätten, sodass das Ergebnis der Ermittlung dadurch eindeutiger wird. Insbesondere lassen sich in diesem Verfahrensstadium isolierte Extrema (z.B. Peaks) in den inkrementellen Wichtungswerten w' unterdrücken, während das tatsächlich gesuchte Extremum, insbesondere Maximum, sich klarer abhebt. Ferner kann somit eine Präzision verbessert werden, da das Glätten ein Rauschen in den ermittelten inkrementellen Wichtungswerten w' zumindest teilweise unterdrückt.

In einer Ausführungsform des Verfahrens wird der zugeordnete Wichtungswert w abhängig vom relativen Versatz $(\Delta u_j, \Delta v_j)$ gewählt, wobei der Wichtungswert w insbesondere mit zunehmendem relativen Versatz zunimmt oder abnimmt. In einer alternativen Ausführungsform des Verfahrens wird der zugeordnete Wichtungswert w abhängig vom relativen Versatz $(\Delta x_i, \Delta y_i)$ gewählt, wobei der Wichtungswert insbesondere mit zunehmendem relativen Versatz zunimmt oder abnimmt. Vorzugsweise ist ein Wichtungswert w umso größer, je näher die Bildposition und die Referenzposition beieinanderliegen und/oder je eindeutiger der Signaturwert innerhalb des ersten Bildbereichs ist. Derart können die Wichtungswerte w hoch sein an denjenigen Bildpositionen, an denen eine hohe Ähnlichkeit mit der gesuchten Zielposition vorliegt, und niedrige Werte an den übrigen (unähnlichen) Bildpositionen. Ein jeweiliger Wichtungswert kann dabei berechnet werden oder ebenfalls aus einer Matrix oder Tabelle ausgelesen werden. Derart wird vorteilhaft die relative Position der Bildposition, zu der ein entsprechender Signaturwert gehört, in die Ermittlung der Zielposition eingebunden.

In einer Ausführungsform des Verfahrens wird eine Position $(u_0,v_0)^*$ des ersten Bildbereichs in dem Korrespondenz-Bild ermittelt, wenn der der Position zugeordnete inkrementelle Wichtungswert w' einen relativen oder absoluten Schwellwert erreicht. Derart kann eine besonders zuverlässige Ermittlung der Position realisiert werden. Insbesondere in Kombination mit der zuvor erwähnten Filterung und/oder Glättung lässt sich derart ein besonders robustes Verfahren angeben.

In einer Ausführungsform des Verfahrens wird ein relativer Versatz $(\Delta u_j, \Delta v_j)$ zu ermittelten Korrespondenz-Signaturwerten $s_j$ unter Verwendung der Zuordnung und einer Transformationsgröße, insbesondere einer Skalierungsgröße und/oder einer Rotationsgröße und/oder einer Translationsgröße und/oder einer Scherungsgröße, berechnet. Die Berechnung unter Einbezug der Transformationsgröße kann in einem Ausführungsbeispiel durch Multiplikation des relativen Versatzes $(\Delta u_j, \Delta v_j)$ (dieser stellt einen 2-dimensionalen Vektor dar) mit einer $(2 \times 2)$-Matrix durchgeführt werden. Insbesondere kann somit eine Skalierung z.B. abhängig von einer Änderung einer Auflösung des ersten Bildbereichs und des Korrespondenz-Bildes und/oder abhängig von einer Änderung einer Gegenstandsweite im ersten Bildbereich und im Korrespondenz-Bild durchgeführt werden. So ist annehmbar, dass sich ein in die Sensorvorrichtung abgebildetes Objekt zwischen Bereitstellung des ersten Bilds und des Korrespondenz-Bilds um einen Faktor r vergrößert (r > 1) oder verkleinert hat (r < 1) oder gleich groß geblieben ist (r = 1). Vorwissen über diesen Bezug (r) kann beispielsweise aus vorausgegangenen Beobachtungen prädiziert oder aus weiteren zur Verfügung stehenden Informationen (beispielsweise Laserentfernungsmessdaten) ermittelt werden und in das erfindungsgemäße Verfahren eingebracht werden:

$$\begin{pmatrix} u_0 \\ v_0 \end{pmatrix} = \begin{pmatrix} u_j \\ v_j \end{pmatrix} + r \cdot \begin{pmatrix} \Delta u_j \\ \Delta v_j \end{pmatrix}.$$

Vorteilhaft kann somit erreicht werden, dass ein für die Abstimmung zu ermittelndes Extremum, insbesondere Maximum, besonders klar ausbildet.

Ferner lässt sich eine relative Rotation von erstem Bildbereich und Korrespondenz-Bild zueinander kompensieren. Hierfür kann der skalaren Faktor r durch eine $2 \times 2$-Matrix ersetzt werden zu

$$\begin{pmatrix} u_0 \\ v_0 \end{pmatrix} = \begin{pmatrix} u_j \\ v_j \end{pmatrix} + \begin{pmatrix} r_{1,1} & r_{1,2} \\ r_{2,1} & r_{2,2} \end{pmatrix} \cdot \begin{pmatrix} \Delta u_j \\ \Delta v_j \end{pmatrix}$$

Derart ist es möglich, zusätzlich zur Skalierung auch eine Rotation, eine Streckung, eine Stauchung und/oder eine Scherung vorzusehen. Derartige Transformationen sind von hoher praktischer Relevanz, insbesondere wenn sich eine Perspektive zwischen erstem Bildbereich und Korrespondenz-Bild verändert (hat).

In einer Ausführungsform des Verfahrens werden Mehrdeutigkeiten durch Löschen und/oder durch Zusammenfassen der mehrdeutigen Signaturwerte entfernt.

**EP 4 000 005 B1**

In einem weiteren Aspekt betrifft die Erfindung ein System-on-Chip (SoC), das dazu eingerichtet ist, das erfindungsgemäße Verfahren durchzuführen. Insbesondere ist das SoC dazu eingerichtet, mittels zumindest einer bildgebenden Sensorvorrichtung zumindest einen ersten Bildbereich und ein Korrespondenz-Bild zu erfassen und abhängig von der ermittelten Position $(u_0,v_0)^*$ des ersten Bildbereichs in dem Korrespondenz-Bild ein Ausgangssignal zu erzeugen.

In einem weiteren Aspekt betrifft die Erfindung eine Steuervorrichtung, die dazu eingerichtet ist, das erfindungsgemäße Verfahren durchzuführen. Insbesondere wird eine Steuervorrichtung mit zumindest einer Prozessorvorrichtung und einer Speichervorrichtung vorgeschlagen, wobei auf der Speichervorrichtung Befehle hinterlegt sind, die beim Ausführen dieser durch die Prozessorvorrichtung bewirken, dass die Steuervorrichtung das erfindungsgemäße Verfahren ausführt. Unter einer "Prozessorvorrichtung" soll insbesondere eine Vorrichtung verstanden werden, die zumindest einen Informationseingang, eine Informationsverarbeitungseinheit zur Bearbeitung sowie eine Informationsausgabe zur Weitergabe der bearbeiteten und/oder ausgewerteten Informationen aufweist. In einem Ausführungsbeispiel umfasst die Prozessorvorrichtung zumindest einen Prozessor. Eine "Speichervorrichtung" dient dabei dazu, ein zur Durchführung eines der beschriebenen Verfahren notwendiges Computerprogramm für die Prozessorvorrichtung bereitzuhalten.

Abschließend betrifft ein weiterer Aspekt der Erfindung ein System umfassend zumindest eine erfindungsgemäße Steuervorrichtung und/oder ein erfindungsgemäßes SoC und mindestens eine bildgebende Sensorvorrichtung, beispielsweise eine Kamera, welche dazu eingerichtet ist, einen ersten Bildbereich und ein Korrespondenz-Bild zu erfassen und bereitzustellen. Insbesondere betrifft die Erfindung ein Fahrzeug, ein Laserentfernungsmessgerät und einen autonomen Roboter mit dem erfindungsgemäßen SoC und/oder der erfindungsgemäßen Steuervorrichtung und mindestens einer bildgebenden Sensorvorrichtung.

In einem weiteren Aspekt betrifft die Erfindung ein Computerprogramm umfassend Befehle, welche bei ihrer Ausführung mittels einer Prozessorvorrichtung einer Steuervorrichtung die Steuervorrichtung veranlassen, das erfindungsgemäße Verfahren auszuführen. Das Computerprogramm umfasst Anweisungen, die eine Steuervorrichtung veranlassen, das erfindungsgemäße Verfahren mit all seinen Schritten auszuführen, wenn das Computerprogramm ausgeführt wird.

Ein weiterer Aspekt der Erfindung betrifft ein computerlesbares Speichermedium, auf dem das erfindungsgemäße Computerprogramm hinterlegt ist, insbesondere gespeichert, ist. Speichermedien an sich sind einem Fachmann dabei bekannt.

Unter "vorgesehen" und "eingerichtet" soll im Folgenden speziell "programmiert", "ausgelegt", "konzipiert" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Das erfindungsgemäße Verfahren stellt ein besonders effizientes und somit Prozessorressourcenschonendes Verfahren dar, bei dem bei der Ermittlung der Position im Korrespondenz-Bild nur sehr wenige Rechenoperationen erforderlich sind. Ferner ist das vorgeschlagene Verfahren im Vergleich zu Verfahren des Standes der Technik besonders diskriminativ und weist daher eine besonders hohe Zuverlässigkeit auf. Diese Vorteile werden insbesondere dadurch erreicht, dass

- der erste Bildbereich mit mehreren Signaturwerten beschrieben wird, wobei nicht nur für die Referenzposition ein Signaturwert ermittelt wird, sondern für mehrere Bildpositionen im ersten Bildbereich;
- eine Zuordnungsvorschrift (insbesondere eine Lookup-Tabelle) zum schnellen Zugriff verwendet wird, wobei die Adresse für den Zugriff unmittelbar auf den Signaturwerten basieren, insbesondere den Signaturwerten entsprechen oder mit einfachen Operationen aus den Signaturwerten ermittelt werden kann, beispielsweise durch binäres Maskieren, binäre XOR-Operationen, Konkatenieren, Änderungen der Bitreihenfolge oder dergleichen;
- Signaturen zu Bildpositionen in dem ersten Bildbereich zum einmaligen Ermitteln der Zuordnungsvorschrift genutzt werden;
- Signaturwerte des Korrespondenz-Bilds nur zum Lesen aus der Zuordnungsvorschrift, insbesondere der Lookup-Tabelle, genutzt werden;
- in der Zuordnungsvorschrift relative Versatze gespeichert werden, die es ermöglichen, von einer jeweiligen Bildposition zu einer Korrespondenz-Signatur durch Verrechnung des relativen Versatzes auf eine jeweilige Zielposition zu schließen;
- an der jeweiligen Zielposition ein Wichtungswert w abgegeben wird, wobei ein inkrementeller Wichtungswert w' ermittelt wird, wobei sich die Position, an der sich der erste Bildbereich in dem Korrespondenz-Bild befindet, durch Ermitteln eines Extremums in den inkrementellen Wichtungswerten w' auffinden lässt.

Vorteilhaft kann das Verfahren noch effizienter gestaltet werden, indem besonders kurze Signaturwerte (und Korrespondenz-Signaturwerte) verwendet werden, beispielsweise mit einer Länge von weniger als 24 Bit.

Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:

Figur 1     eine schematische Ansicht einer Ausgestaltung eines erfindungsgemäßen Systems in Form eines Laserentfernungsmessgeräts, das sich in einer exemplarischen Messkonstellation befindet,

Figur 2a-2b     eine schematische Veranschaulichung (a) eines ersten Bildbereichs und (b) eines Korrespondenz-Bilds ausgehend von der exemplarischen Messkonstellation aus Figur 1,

Figur 3     eine schematische Darstellung einer Ausführungsform des erfindungsgemäßen Verfahrens,

Figur 4a-4f     während der Ausführung des Verfahrens nach Figur 3 verwendete und/oder erstellte Matrizen: (a) Matrix von Signaturwerten, (b) Matrix von relativen Versatzen, (c) Matrix von Wichtungswerten, (d) Zuordnungsvorschrift, (e) Matrix zur Erläuterung des Ablaufs einer Abstimmung, (f) Matrix von inkrementellen Wichtungswerten,

Figur 5a-5b     schematische, bildliche Darstellungen von Abstimmungsmatrizen,

Figur 6     eine schematische Darstellung eines erfindungsgemäßen System-on-a-Chip.

Beschreibung der Ausführungsbeispiele

Vorbemerkung: Die zuvor weitgehend verwendeten Ausdrücke

- $(x_i, y_i)$ zu einer Bildposition im ersten Bildbereich,
- $(u_j, v_j)$ zu einer Bildposition im Korrespondenz-Bild,
- $(\Delta x_i, \Delta y_i)$ oder $(\Delta u_j, \Delta v_j)$ für einen relativen Versatz bezüglich der Referenzposition,
- $s_i$ für einen Signaturwert zu einer Bildposition im ersten Bildbereich,
- $s_j$ für einen Korrespondenz-Signaturwert zu einer Bildposition im Korrespondenz-Bild,
- $(u_0, v_0) = (u_j, v_j) + (\Delta u_j, \Delta v_j) = (\Delta u_j + u_j, \Delta v_j + v_j)$ für berechnete Zielpositionen im Korrespondenz-Bild,
- $w$ für einen Wichtungswert,
- $w'$ für einen inkrementellen Wichtungswert und
- $(u_0, v_0)^*$ für die ermittelte Position des ersten Bildbereichs in dem Korrespondenz-Bild

werden im Folgenden wegen Einführung von Bezugszeichen nicht weiter ausgeführt, sind aber prinzipiell konsistent verwendbar.

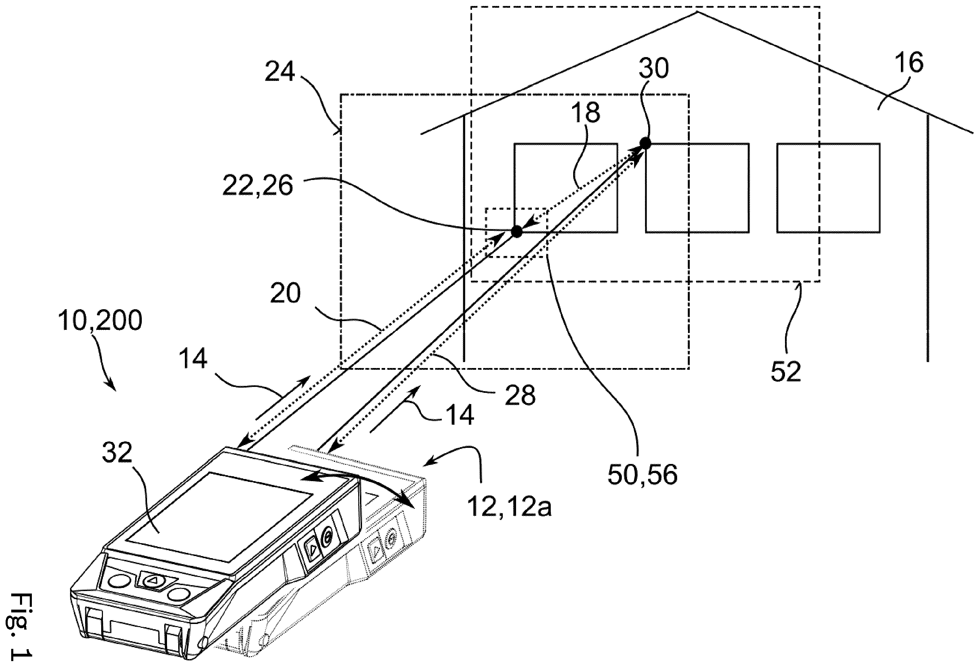

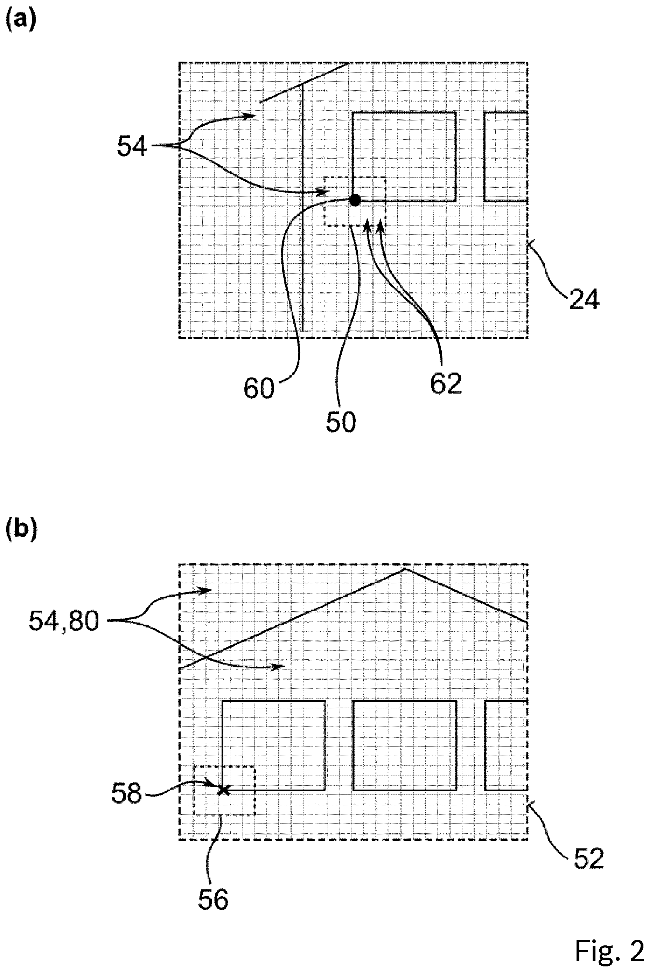

Die folgende Beschreibung bezieht sich auf Figur 1 und Figuren 2a und 2b. Figur 1 zeigt einen Anwendungsfall, der die Aufgabe der Erfindung anhand eines realen Beispiels - hier dem indirekten Messen von Abständen (auch: Längen) - veranschaulicht. In schematischer Ansicht ist eine Messkonstellation dargestellt, in der ein Laserentfernungsmessgerät 10 mit einer bildgebenden Sensorvorrichtung 12a, hier realisiert als eine Kamera 12, eingesetzt wird. In der gezeigten Ausführungsform befindet sich das Laserentfernungsmessgerät 10 in einem dreidimensionalen Raum. Dabei ist das Laserentfernungsmessgerät 10 derart ausgerichtet, dass eine Entfernungsmessrichtung 14 auf ein Zielobjekt 16, hier als ein Haus dargestellt, ausgerichtet ist. Ziel des Anwenders könnte hier sein, den Abstand 18 in der dargestellten Messkonstellation durch indirekte Messung zu ermitteln. Dabei wird mittels des handgehaltenen Laserentfernungsmessgeräts 10 eine erste Distanz 20 zu einem ersten (entfernten) Punkt 22 (beispielsweise die dargestellte Ecke 26 eines Fensters) gemessen. Gleichzeitig zur Durchführung der Messung der ersten Distanz 20 wird mittels des Laserentfernungsmessgeräts 10 das Bild 24 - umfassend den ersten Bildbereich 50 - zumindest einer Umgebung des ersten Punkts 22 mittels der in dem Laserentfernungsmessgerät 10 integrierten Kamera 12 erfasst. Das Bild 24 ist in Figur 2a schematisch dargestellt. Dazu ist die Kamera 12 auf einer dem entfernten Objekt zugewandten Seite des Gehäuses integriert. Anschließend wird eine zweite Distanz 28 zu einem zweiten (entfernten) Punkt 30 gemessen. Gleichzeitig zur Durchführung der Messung der zweiten Distanz 28 zum zweiten Punkt 30 wird ein Bild zumindest einer Umgebung des zweiten Punkts 30 erfasst - das Korrespondenz-Bild 52. Das Korrespondenz-Bild 52 ist in Figur 2b schematisch dargestellt.

Das Laserentfernungsmessgerät 10 ermittelt aus den beiden gemessenen Distanzen und den synchron damit aufgezeichneten Bildern indirekt den Abstand 18 zwischen dem ersten Punkt 22 und dem zweiten Punkt 30 und gibt diesen unter Verwendung einer Ausgabevorrichtung 32 an den Anwender aus. Insbesondere ist es erforderlich, nach erfindungsgemäßem Verfahren 100 eine möglichst exakte Position des ersten Bildbereichs 50 in dem Korrespondenz-Bild 52 zu ermitteln, um anschließend eine (mögliche) Translation des handgehaltenen Laserentfernungsmessgeräts 10 zwischen den beiden Entfernungsmessungen zu bestimmen. Eine mögliche Rotation des Laserentfernungsmessgeräts 10 zwischen den beiden Bildaufnahmen, die im handgehaltenen Betrieb kaum vermeidbar ist, soll hier als bekannt angenommen sein, da sie mit kostengünstiger Inertialsensorik (hier nicht näher dargestellt) ermittelt werden kann. Diese Rotation kann als Vorwissen eingebracht werden, sodass der Freiheitsgrad der Rotation bei der Durchführung des erfindungsgemäßen Verfahrens 100 außer Acht bleiben kann. Alternativ oder zusätzlich kann diese Rotation ebenfalls nach erfindungsgemäßem Verfahren 100 ermittelt werden (siehe Beschreibung oben). Insbesondere wurde hier bereits eine mögliche Rotation in der Bildebene auf den ersten Bildbereich 50 angewandt, sodass Grau- oder Farbwerte aus dem gedrehten rechteckigen ersten Bildbereich 50 ausgelesen werden. Dabei kann eine Interpolation der Werte vorteilhaft sein. Da die mögliche Rotation bereits im ersten Bildbereich 50 kompensiert wurde, ist im Korrespondenz-Bild 52 keine weitere Kompensation der Rotation erforderlich. Alternativ kann die Rotation auch nur im Korrespondenz-Bild 52 kompensiert werden. Weiterhin alternativ kann die Kompensation der Rotation anteilig auf Bildbereich 50 und Korrespondenz-Bild 52 verteilt werden.

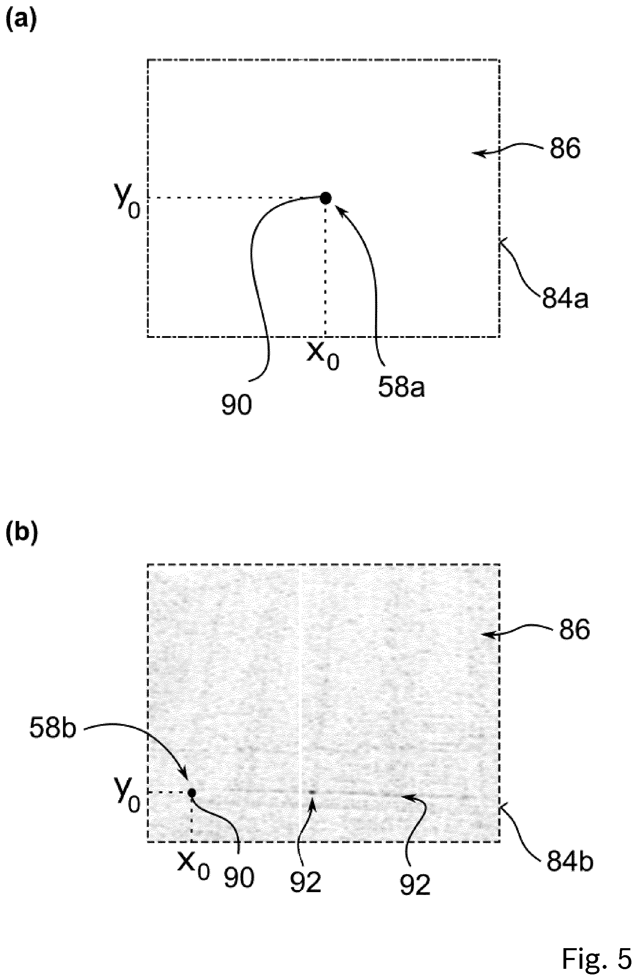

Im Korrespondenz-Bild 52 wird derjenige zweite Bildbereich 56 gesucht, dessen Inhalt (d.h. Bildinhalt bzw. Bilddateninhalt) zu dem Inhalt des ersten Bildbereichs 50 korrespondiert, d.h. diesem entspricht bzw. diesem ähnlich ist. Dabei wird der erste Bildbereich 50 in dem Korrespondenz-Bild 52 gefunden, wenn die Position 58 des ersten Bildbereichs 50 (hier durch die Mitte des Bildbereichs 56 gekennzeichnet) in dem Korrespondenz-Bild 52 - beispielsweise angebbar in Pixelkoordinaten bezogen auf das Korrespondenz-Bild 52 (vgl. Koordinatenangaben in Figuren 5a oder 5b) - ermittelt wird.

Das Ergebnis dieser Suche ist in Figur 2b bereits vorweggenommen und im Korrespondenz-Bild 52 durch ein den zweiten Bildbereich 56 kennzeichnendes gestricheltes Rechteck veranschaulicht. Es sei angemerkt, dass anders als in diesem Ausführungsbeispiel der erste Bildbereich 50 und/oder das Korrespondenz-Bild 52 auch eine andere Form, beispielsweise eine rechteckige, runde, ovale, elliptische, sichelförmige, kreuzförmige, polygonale, isogonale Form oder weitere, dem Fachmann bekannte Form, aufweisen kann.

Das dargestellte Laserentfernungsmessgerät 10 der Figur 1 umfasst ferner eine hier nicht näher dargestellte, erfindungsgemäße Steuervorrichtung zur Durchführung des erfindungsgemäßen Verfahrens 100. Dazu umfasst die Steuervorrichtung des Laserentfernungsmessgeräts 10 ein Computerprogramm umfassend Befehle, welche bei ihrer Ausführung mittels einer Prozessorvorrichtung der Steuervorrichtung die Steuervorrichtung veranlassen, das erfindungsgemäße Verfahren 100 auszuführen. Das Computerprogramm ist auf einem computerlesbaren Speichermedium hinterlegt. Das Laserentfernungsmessgerät 10 umfassend die bildgebende Sensorvorrichtung 12a stellt ein erfindungsgemäßes System 200 dar.

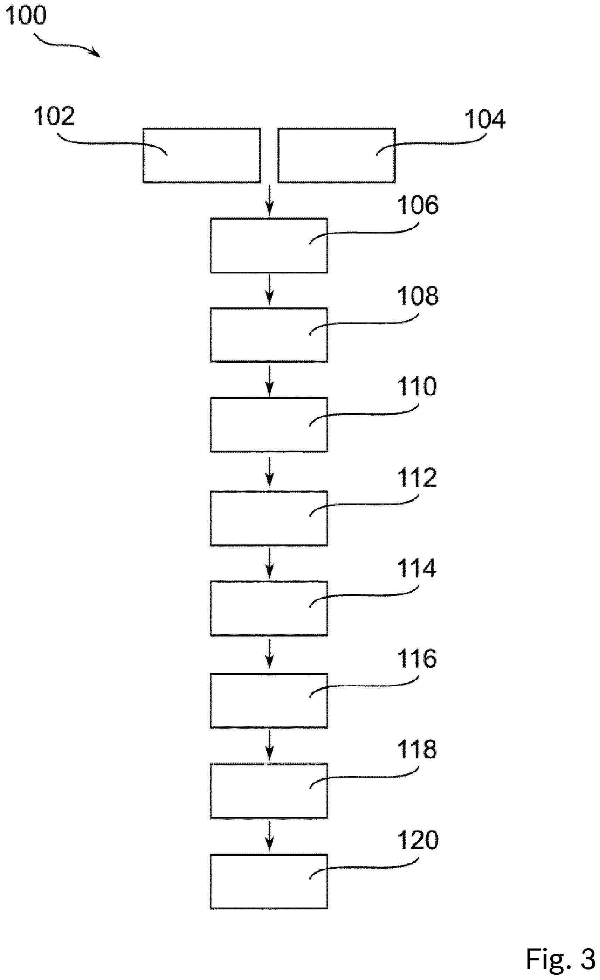

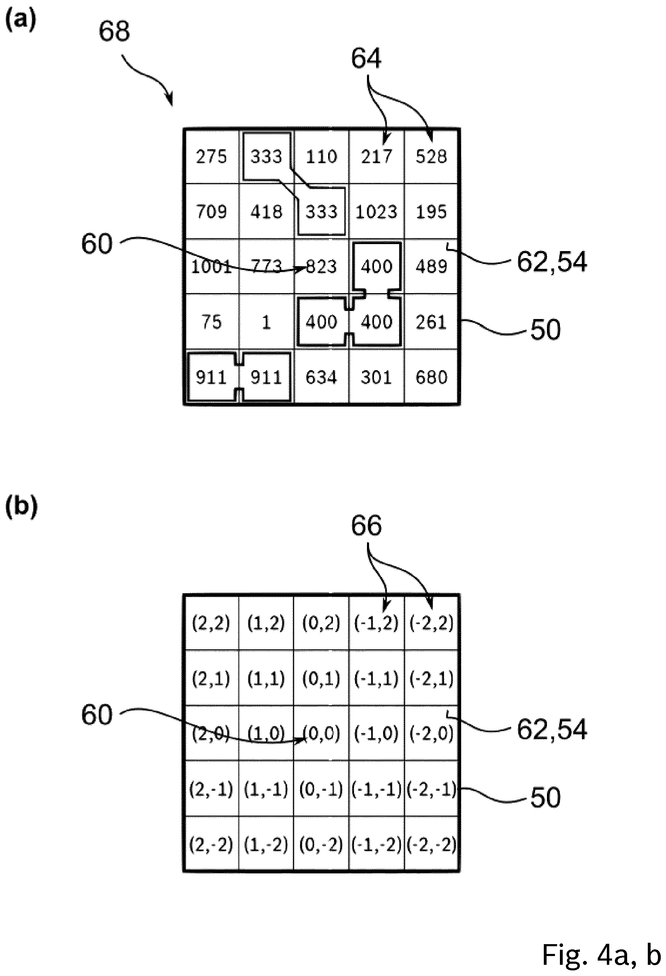

Der Ablauf des erfindungsgemäßen Verfahrens 100 zum Ermitteln einer Position 58 des ersten Bildbereichs 50 in dem Korrespondenz-Bild 52, wobei der erste Bildbereich 50 zu zumindest einem zweiten Bildbereich 56 in dem Korrespondenz-Bild 52 korrespondiert, ist in Figur 3 als Verfahrensdiagramm dargestellt und wird unter Verwendung der Figuren 2 und 4a-4f erläutert.

In einem ersten Verfahrensschritt 102 wird der erste Bildbereich 50 umfassend zumindest eine Referenzposition 60 bereitgestellt (vgl. gestricheltes Rechteck in Figur 2a). Das Bereitstellen erfolgt in diesem Ausführungsbeispiel mittels der Kamera 12 als bildgebender Sensorvorrichtung 12a des Laserentfernungsmessgeräts 10, wie oben für die beispielhafte Messkonstellation beschrieben. In diesem Ausführungsbeispiel ist der bereitgestellte, aus dem ersten Bild 24 ausgeschnittene erste Bildbereich 50 etwas größer gewählt, damit bei der anschließend durchzuführenden Ermittlung von Signaturwerten 64 ausreichend Reserve vorhanden ist, denn bei der Ermittlung wird nicht nur eine einzelne Bildposition 62 (hier als Bildpunkt oder Pixel 54 gewählt) einbezogen, sondern auch dessen lokale Umgebung berücksichtigt. In Verfahrensschritt 104 wird das Korrespondenz-Bild 52 bereitgestellt (vgl. Figur 2b). Das Bereitstellen erfolgt hier ebenfalls mittels der Kamera 12 des Laserentfernungsmessgeräts 10. Es sei angemerkt, dass die Verfahrensschritte 102 und 104 zeitversetzt erfolgen können, wobei es zweckmäßig sein kann, den ersten Bildbereich 50 und/oder das Korrespondenz-Bild 52 zwischenspeichern zu können, wobei das Bereitstellen sodann durch Auslesen aus einem Speicher erfolgt. In den Darstellungen der Figur 2 sind einzelne Bildpositionen 62 bzw. 80 durch Pixel 54 (hier durch ein Gitter) wiedergegeben. Jeder Pixelposition kann somit ein Koordinatenpaar $(x_i, y_i)$ zugeordnet werden, das die Bildposition 62 bzw. 80 beschreibt. Wie bereits erwähnt, zeigt Figur 2b bereits das Ergebnis des Verfahrens, d.h. den zweiten Bildbereich 56.

Es sei angemerkt, dass in dem dargestellten Ausführungsbeispiel des erfindungsgemäßen Verfahrens 100 beispielhafte Bilddaten für den ersten Bildbereich 50 und das Korrespondenz-Bild 52 gezeigt sind, die zur besseren Veranschaulichung in ihrer Größe auf wenige Pixel 54 reduziert dargestellt sind (beispielsweise im Falle des ersten Bildbereichs 50 auf 5×5 Pixel, statt wie in einem typischen Anwendungsfall beispielsweise umfassend 41×51 Pixel).

In Verfahrensschritt 106 werden eine Mehrzahl von Signaturwerten 64 (bezeichenbar mit $s_i$) zu verschiedenen Bildpositionen 62 (beschreibbar durch Pixelkoordinaten $(x_i, y_i)$) im ersten Bildbereich 50 ermittelt. Ein Signaturwert 64 charakterisiert eine Umgebung einer Bildposition 62 im ersten Bildbereich 50. Eine jeweilige Bildposition 62 weist einen relativen Versatz 66 - beschreibbar als Abstand $(\Delta x_i, \Delta y_i)$ der Pixelkoordinaten - bezüglich der Referenzposition 60 auf (vgl. auch Figuren 4a und 4b). Für die Ermittlung eines Signaturwerts 64 sind dem Fachmann verschiedene Möglichkeit bekannt. Beispielsweise kann sie eine Glättung der Bilddaten beinhalten, gefolgt von mehreren paarweisen Vergleichen von Pixelwerten aus Bildpositionen 62 (Pixelpositionen) in vorgegebener relativer Anordnung, mit Binarisierung und Konkatenation der Einzelergebnisse, wobei eine Binärfolge ermittelt wird. Die Binärfolge hat in diesem Ausführungsbeispiel eine Länge von 10 Bit, entsprechend einem Wertebereich von 0 bis 1023. Die Mehrzahl von Signaturwerten 64 zu verschiedenen Bildpositionen 62 im ersten Bildbereich 50 wird in Form einer Matrix, der sogenannten ersten Signaturwertmatrix 68, ermittelt. Im vorliegenden Ausführungsbeispiel wird angenommen, dass der erste Bildbereich 50 hinreichend groß ist und dass pro Bildposition 62, hier durch die einzelnen Pixel 54 des Bildbereichs 50 gegeben, ein Signaturwert 64 ermittelt wird. Es sei angemerkt, dass es prinzipiell auch möglich ist, mehr als einen oder weniger als einen Signaturwert 64 pro Bildposition 62 (d.h. pro Pixel 54) zu ermitteln.

In Figur 4a ist eine derartige Matrix von Signaturwerten 64 dargestellt, die den ersten Bildbereich 50 repräsentieren. Diese sog. erste Signaturwertmatrix 68, auch als erstes Signaturbild bezeichenbar, besteht hier beispielhaft aus 5×5 Matrixelementen. Dies entspricht 5×5 Bildpositionen 62 (Pixeln 54) im ersten Bildbereich 50. Es existiert dabei eine eindeutige Zuordnung zwischen jedem Matrixelement der Signaturwertmatrix 68 zu einer Bildposition 62 im ersten Bildbereich 50. Die Signaturwerte 64 weisen hier - wie beschrieben - einen Wertebereich von 0 bis 1023 auf.

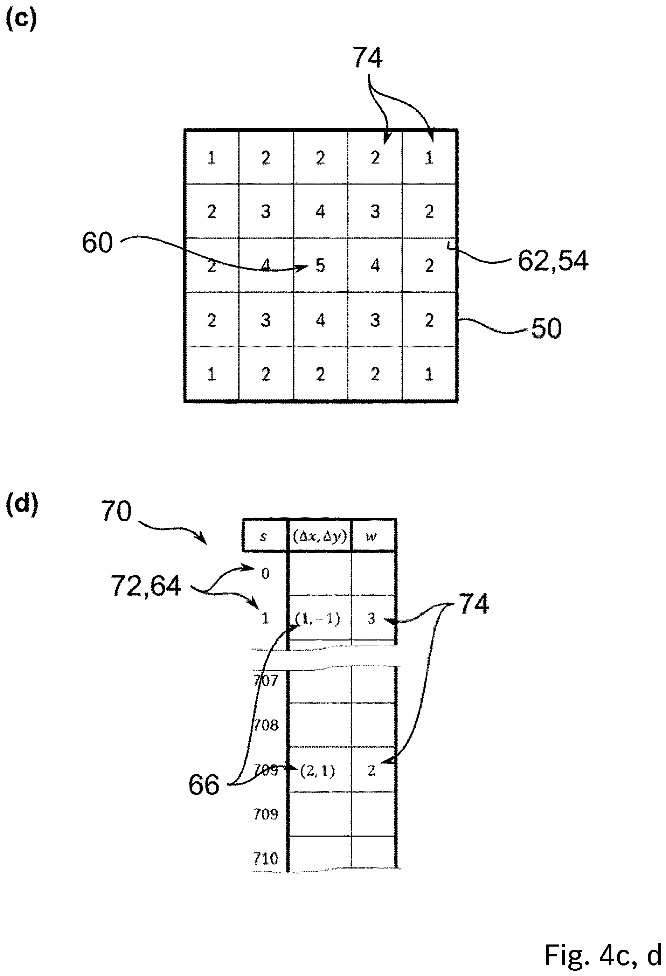

In Verfahrensschritt 108 werden relative Versatze 66 einer Mehrzahl von Bildpositionen 62 - ggf. auch aller Bildpositionen 62 - im ersten Bildbereich 50 zu jeweilig ermittelten Signaturwerten 64 zugeordnet. Die relativen Versatze 66 der Mehrzahl von Bildpositionen 62 im ersten Bildbereich 50 werden zu jeweilig ermittelten Signaturwerten 64 in einer Zuordnungsvorschrift 70, insbesondere in einer Lookup-Tabelle, zugeordnet. Eine derartige Zuordnungsvorschrift ist in Figur 4d dargestellt. Unter Verwendung eines jeweiligen Signaturwerts 64 wird dabei eine Adresse 72 der Zuordnungsvorschrift 70, insbesondere der Lookup-Tabelle, festgelegt. Insbesondere wird durch den jeweiligen Signaturwert 64 eine Tabellenadresse festgelegt, an der die jeweilige Eintragung vorgenommen wird. Der Inhalt der Eintragung umfasst relative Versatze 66 und Wichtungswerte 74 (bezeichenbar mit w). Wie bereits beschrieben ist denkbar, dass die Adresse nicht identisch mit einem Signaturwert ist, sondern mittelbar aus einem Signaturwert oder mehreren Signaturwerten ermittelt werden kann, z.B. durch Weglassen von Anteilen, Zusammenfügen von Anteilen, Bitoperationen, Berechnungen oder dergleichen.

Zur Erstellung dieser Zuordnungsvorschrift werden in diesem Ausführungsbeispiel zwei weitere Matrizen verwendet, dargestellt in Figuren 4b und 4c. In Figur 4b ist eine Matrix von relativen Versatzen 66 dargestellt, die genauso groß ist wie die erste Signaturwertmatrix 68. Dabei enthält jedes Matrixelement diejenigen relativen Versatze 66, die an der jeweiligen Position eines Matrixelements - entsprechend einer Bildposition 62 - aufaddiert werden müssen, um zur Referenzposition 60 zu gelangen. Die Referenzposition 60 ist dabei als die Mitte der Matrix gewählt.

Beispielsweise steht an der ersten Stelle von links in der zweiten Zeile die Eintragung ,(2;1)'. Dies bedeutet, dass man von diesem Matrixelement aus zwei Felder nach rechts und ein Feld nach unten wandern muss, um zur Referenzposition 60 zu gelangen. Dabei zeigt die angenommene x-Koordinatenachse nach rechts und die angenommene y-Koordinatenachse nach unten, wie in der Bildverarbeitung üblich. Die Matrix von relativen Versatzen 66 ist in diesem Ausführungsbeispiel als fest und unveränderlich vorgesehen und muss somit nicht in einem veränderlichen Speicher gespeichert werden.

In Figur 4c ist ferner eine Matrix von Wichtungswerten 74 dargestellt, wobei diese ebenfalls so groß ist wie die erste Signaturwertmatrix 68. In diesem Ausführungsbeispiel sind die Wichtungswerte 74 ganzzahlig und nehmen mit zunehmendem Abstand von der Referenzposition 60 (d.h. von der Mitte der Matrix bzw. des ersten Bildbereichs 50) im Wesentlichen ab. Somit wird ein Wichtungswert 74 abhängig vom relativen Versatz 66 gewählt. Mit einer so gewählten Matrix von Wichtungswerten 74 wird bewirkt, dass Signaturwerte 64 in der Nähe der Mitte der Signaturwertmatrix 68 mit einem stärkeren Gewicht an der Abstimmung berücksichtigt werden als Signaturwerte 64 am Rand der Signaturwertmatrix 68. Als Wichtungswerte 74 werden kleine ganze Zahlen verwendet, mit dem Vorteil, dass diese mit kürzeren Wortlängen beschreibbar sind und zu kleinerem Speicher- und Bandbreitebedarf für die Übertragung führen, was für Embedded-Systeme relevant und vorteilhaft ist. Die Matrix von Wichtungswerten 74 ist in diesem Ausführungsbeispiel veränderlich vorgesehen. Dabei wird insbesondere auch Null als Wichtungswert 74 zugelassen, um so bestimmte Signaturwerte 64 von der Abstimmung ausschließen zu können, beispielsweise wenn ein Signaturwert 64 mehrdeutig ist. Es sei angemerkt, dass in einem einfachsten Ausführungsbeispiel auch vorgesehen sein kann, dass alle Wichtungswerte 74 den Wert 1 aufweisen. In diesem Fall kann auf die Matrix von Wichtungswerten 74 prinzipiell auch verzichtet werden.

Figur 4d zeigt einen Ausschnitt der mit beispielhaften Werten bestückten Zuordnungsvorschrift 70, insbesondere der Lookup-Tabelle, die hier die Adressen 72 im Bereich von 0 bis 1023 aufweist. Es ist ein Befüllungszustand dargestellt, der vorliegt, nachdem das Beschreiben der Zuordnungsvorschrift 70 anhand der Signaturwertmatrix 64 aus Figur 4a und anhand der Matrix von relativen Versatzen 66 aus Figur 4b und optional anhand der Matrix von Wichtungswerten 74 aus Figur 4c stattgefunden hat. An der Adresse ,1' der Zuordnungsvorschrift 70 ist ein entsprechender relativer Versatz 66 mit ,(1;-1)' sowie ein Wichtungswert 74 mit ,3' hinterlegt bzw. abgespeichert. Der Vergleich mit Figur 4a zeigt, dass der Signaturwert ,1' nur in der vorletzten Zeile im zweiten Feld der Signaturwertmatrix 68 auftritt. An der entsprechenden Stelle der Matrix von relativen Versatzen 66 (Figur 4b) befindet sich die Eintragung ,(-1;-1)' und an der entsprechenden Stelle der Matrix von Wichtungswerten 74 befindet sich die Eintragung ,3'.

Der Ablauf beim Beschreiben der Zuordnungsvorschrift 70 ist folgendermaßen:

- elementweise und synchrone Iteration (beispielsweise in Zeilen- oder Spaltenrichtung) durch alle Matrixelemente der 5×5 Matrixelemente großen Matrizen - Signaturwertmatrix 68 (Figur 4a), Matrix von relativen Versatzen 66 (Figur 4b) und Matrix von Wichtungswerten 74 (Figur 4c);
- dabei auslesen von Signaturwerten 64 aus der Signaturwertmatrix 68, von relativem Versatz 66 aus der Matrix der relativen Versatze 66 und Wichtungswert 74 aus der Matrix der Wichtungswerte 74;
- springen an die Adresse 72 der Zuordnungsvorschrift 70, die unter Verwendung des Signaturwerts 64 festgelegt ist, und eintragen von relativem Versatz 66 sowie Wichtungswert 74 - wobei in dem in Figur 4d dargestellten Ausführungsbeispiel vereinfachend angenommen ist, dass der Signaturwert 64 unmittelbar die Adresse 72 in der Zuordnungsvorschrift 70 darstellt.

Die Zuordnungsvorschrift 70 kann Adressen 72 enthalten, an denen keine Eintragung vorgenommen worden ist. Dies ist in Figur 4d durch leere Felder dargestellt. Tatsächlich wird dort in der Praxis jedoch etwas eingetragen sein, beispielsweise beliebige (weil irrelevante) relative Versatze 66 und/oder Wichtungswerte ‚0' - wobei ’0’ beispielhaft den ‚Leer-Zustand' kennzeichnet. Der ‚Leer-Zustand' kann bedeuten, dass der entsprechende Signaturwert 64 in der Signaturwertmatrix 68 nicht vorgekommen ist oder dass der entsprechende Signaturwert 64 zu oft vorgekommen ist, sodass er zur Vermeidung von Mehrdeutigkeiten gelöscht wurde. Insbesondere ist denkbar, letztgenannten Fall gelöschter Signaturwerte 64 auf Grund der Vermeidung von Mehrdeutigkeiten auch mit einem speziellen Wert zu codieren, z. B. mit ‚-1’, um ihn vom ‚Leer-Zustand' zu unterscheiden. Die Adressen 72 selbst benötigen keinen Speicherplatz, da sie nur implizit und fest in aufsteigender Reihenfolge vorhanden sind. Soll die Zuordnungsvorschrift 70 ein weiteres Mal benutzt werden, beispielsweise um einen weiteren ersten Bildbereich 50 in einem weiteren oder demselben Korrespondenz-Bild 52 zu suchen, kann sie durch Nullsetzen sämtlicher Wichtungswerte 74 und/oder relativer Versatze 66 zurückgesetzt werden. Alternativ und insbesondere weniger aufwändig ist es, nur diejenigen Signaturwerte 64 durchzugehen und zurückzusetzen, die bei einer vorherigen Durchführung des Verfahrens 100 verwendet und somit geändert wurden. Diese betroffenen Signaturwerte 64 können aus der entsprechenden alten (zwischengespeicherten) ersten Signaturwertmatrix 68 nochmals nachgelesen werden.

In diesem Ausführungsbeispiel kommen Wiederholungen einzelner Signaturwerte 64 vor - hier beispielsweise eine Häufung der Werte ‚333’, ‚911’ und ‚400’ (gekennzeichnet durch Umrahmungen) in Figur 4a. Für solche Fälle von Mehrdeutigkeiten wird in diesem Ausführungsbeispiel in Verfahrensschritt 108 eine Mehrdeutigkeitsbehandlung durchgeführt, indem Mehrdeutigkeiten zusammengefasst oder gelöscht werden (hier nicht näher dargestellt).

Gemäß einer ersten Option werden Mehrdeutigkeiten von Signaturwerten 64 gelöscht. Das bedeutet, dass mehrdeutige Signaturwerte 64 von der Durchführung des weiteren Verfahrens 100 ausgeschlossen werden. Dies kann unter Zuhilfenahme der nachfolgend beschriebenen Zuordnungsvorschrift 70 während des Beschreibens erreicht werden, indem beispielsweise durch das Schreiben eines Wichtungswerts 74 von ‚-1’ der zugehörige Signaturwert 64 als auszuschließen gekennzeichnet wird. Der Signaturwert 64 steht dann für die spätere Korrespondenzsuche nicht mehr zur Verfügung. Praktisch kann eine Umsetzung wie folgt aussehen: Wird beim Versuch, eine Eintragung vorzunehmen, festgestellt, dass an einer Adresse bereits ein Wichtungswert w mit größer ‚0' eingetragen ist, so wird dieser auf ‚-1’ gesetzt. Wir bei einem weiteren Versuch, eine Eintragung vorzunehmen, festgestellt, dass an dieser Adresse bereits ‚-1’ als Wichtungswert eingetragen ist, so wird diese Eintragung abgebrochen und der Wichtungswert ‚-1’ belassen.

Gemäß einer weiteren Option werden Mehrdeutigkeiten von Signaturwerten 64 durch Zusammenfassen behoben. Dies kann erfolgen, indem in der Zuordnungsvorschrift 70 mehrere relative Versatze 66 durch Multiplikation mit jeweiligen zugehörigen Wichtungswerten 74 gewichtet werden:

$$((w_{i1}{\cdot}\Delta x_{i1} + w_{i2}{\cdot}\Delta x_{i2} + \ldots)/(w_{i1} + w_{i2} + \ldots);(w_{i1}{\cdot}\Delta y_{i1} + w_{i2}{\cdot}\Delta y_{i2} + \ldots)/(w_{i1} + w_{i2} + \ldots)).$$

Die Division durch $(w_{i1} + w_{i2} + \ldots)$ kann zur Vereinfachung auch auf einen späteren Zeitpunkt verlagert werden (beispielsweise nachdem der letzte Signaturwert 64 eingegangen ist).

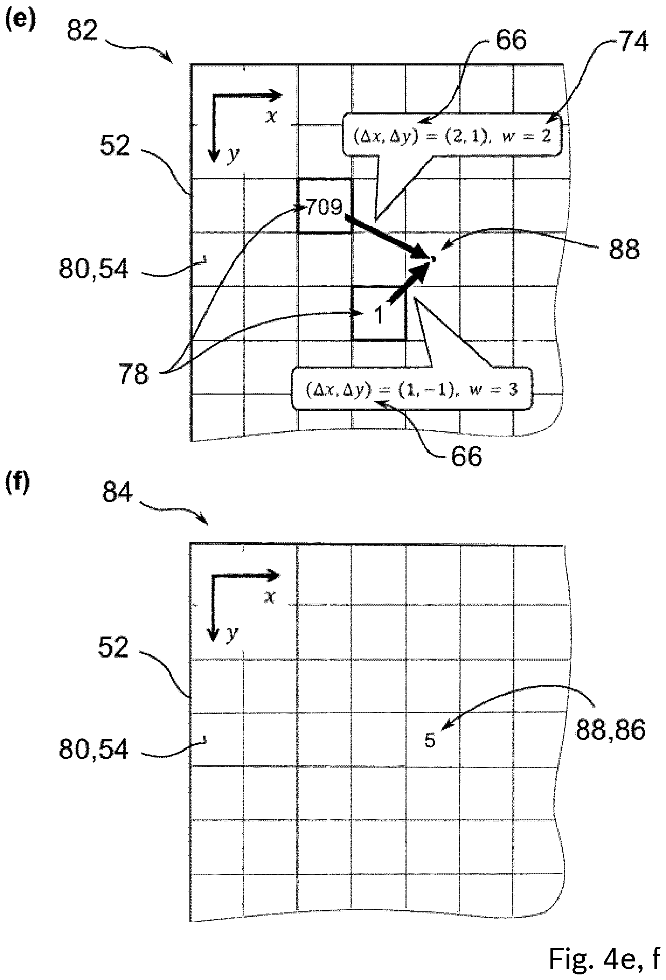

In Verfahrensschritt 110 wird eine Mehrzahl von Korrespondenz-Signaturwerten 78 (bezeichnet mit $s_j$) zu verschiedenen Bildpositionen 80 (bezeichenbar mit $(u_j,v_j)$) im Korrespondenz-Bild 52 ermittelt, wobei ein Korrespondenz-Signaturwert 78 eine Umgebung einer Bildposition 80 im Korrespondenz-Bild 52 charakterisiert. Die Korrespondenz-Signaturwerte 78 zu Bildpositionen 80 im Korrespondenz-Bild 52 werden analog gebildet, insbesondere nach derselben Vorschrift gebildet, wie die Signaturwerte 64 zu Bildpositionen 62 im ersten Bildbereich 50. Das Ergebnis ist eine zweite Signaturwertmatrix 82 (auch als zweites Signaturbild bezeichenbar), wie sie in Figur 4e dargestellt ist. Es sei angemerkt, dass die zweite Signaturwertmatrix 82 einen "leeren Rand" aufweist, da für die Ermittlung von Korrespondenz-Signaturwerten 78 eine lokale Nachbarschaft erforderlich ist, was in der Nähe des Bildrands nicht überall der Fall ist, sodass dort nicht überall ein gültiger Korrespondenz-Signaturwert 78 ermittelt werden kann. Beispielsweise kann der "leere Rand" dabei entweder durch Weglassen von Zeilen oder Spalten der zweiten Signaturwertmatrix 82 umgesetzt sein oder mittels einer Kennzeichnung von Korrespondenz-Signaturwerten 78 als "ungültig", z.B. durch einen speziellen Signaturwert oder durch einen Wichtungswert ‚0'. Auch für die zweite Signaturwertmatrix 82 kann es vorteilhaft sein, eine Behandlung von Mehrdeutigkeiten durchzuführen - und zwar unabhängig davon, ob eine solche für die erste Signaturwertmatrix 68 durchgeführt wird oder nicht. Es sei angemerkt, dass die zweite Signaturwertmatrix 82 nicht zwangsläufig als Ganzes existieren muss. Insbesondere ist es nicht notwendig, die zweite Signaturwertmatrix 82 zu speichern. Stattdessen kann es ausreichend sein, nur einen Bruchteil davon zu speichern, z.B. nur so viele Matrix-Zeilen von Korrespondenz-Signaturwerten 78, wie für die Mehrdeutigkeitsbehandlung nötig sind - oder sogar nur einen einzelnen Korrespondenz-Signaturwert 78 vorzuhalten. Denn der Korrespondenz-Signaturwert 78 wird nur kurzzeitig benötigt und kann anschließend vergessen werden. Dies ermöglicht eine Umsetzung des Verfahrens 100 mit sehr geringem Speicherbedarf, was es beispielsweise für kostenkritische Embedded-Systeme interessant macht.

Die folgenden Verfahrensschritte 112 - 116 stellen die Durchführung einer Abstimmung dar, mit dem Ziel, eine Abstimmungsmatrix 84 (auch bezeichnet als Abstimmungsbild oder Stimmgewichtsmatrix), insbesondere von der Größe der zweiten Signaturwertmatrix 82 (evtl. abzüglich des leeren Rands, s.o.), zu ermitteln, wobei die Abstimmungsmatrix 84 hohe Werte an denjenigen Matrixelementen enthält, an denen eine hohe Ähnlichkeit mit der gesuchten Position 58 vorliegt und niedrige Werte an den übrigen (unähnlichen) Positionen. Da bei der Abstimmung Wichtungswerte an Bildpositionen $(\Delta u_j + u_j, \Delta v_j + v_j)$ eingetragen werden müssen, kann es ferner auch sinnvoll sein, die Abstimmungsmatrix 84 gerade genau so groß zu wählen, dass eine Eintragung von Wichtungswerten 74 immer möglich ist - also keine Wichtungswerte 74 außerhalb der Abstimmungsmatrix 84 landen.

In Verfahrensschritt 112 werden relative Versatze 66 (jetzt bezeichenbar als $(\Delta u_j, \Delta v_j)$) zu ermittelten Korrespondenz-Signaturwerten 78 unter Verwendung der Zuordnungsvorschrift 70 ermittelt. In Figur 4e ist veranschaulicht, wie die Abstimmung anschaulich abläuft. Bei dem dargestellten Bild handelt es sich um die zweite Signaturwertmatrix 82, die stellvertretend den Inhalt des Korrespondenz-Bilds 52 repräsentiert. Diese zweite Signaturwertmatrix 82 wird insbesondere elementweise prozessiert, beispielsweise zeilenweise, oben links beginnend. Ist an der jeweiligen Bildposition 80 (Matrixposition) ein gültiger Korrespondenz-Signaturwert 78 vorhanden - hier ‚709' - so wird an der zum Korrespondenz-Signaturwert 78 korrespondierenden Adresse 72 der Zuordnungsvorschrift 70, insbesondere der Lookup-Tabelle, geprüft, ob eine gültige Eintragung vorhanden ist, d.h. in diesem Ausführungsbeispiel, ob der dort gespeicherte Wichtungswert 74 größer als Null ist. Ist dies der Fall, werden die dort gespeicherten relativen Versatze 66 und der Wichtungswert 74 ausgelesen - hier der relative Versatz ‚(2;1)' und der Wichtungswert ‚2'. Entsprechend wird bei der Durchführung der Abstimmung wieder auf die Zuordnungsvorschrift 70 zugegriffen, diesmal aber nur lesend. Dabei wird pro gültigem Korrespondenz-Signaturwert 78, insbesondere aus der zweiten Signaturwertmatrix 82, an der durch den Korrespondenz-Signaturwert 78 festgelegten Adresse 72 der Zuordnungsvorschrift 70 zugegriffen und dort - sofern vorhanden - die gespeicherten relativen Versatze 66 und der Wichtungswert 74 ausgelesen.

In Verfahrensschritt 114 werden Zielpositionen (bezeichenbar als $(u_0, v_0) = (u_j, v_j) + (\Delta u_j, \Delta v_j) = (\Delta u_j + u_j, \Delta v_j + v_j)$ in dem Korrespondenz-Bild 52 durch Addition des relativen Versatzes 66 $(\Delta u_j, \Delta v_j)$ und jeweiliger Bildposition 80 $(u_j, v_j)$ im Korrespondenz-Bild 52 berechnet. Optional kann an dieser Stelle auch eine Skalierung, bevorzugt eine Rotation, Streckung/Stauchung und Scherung kompensiert werden. Dabei werden Wichtungswerte 74 zu Zielpositionen im Korrespondenz-Bild 52 in Form der Abstimmungsmatrix 84 zugeordnet - vgl. Figur 4f. Die Abstimmungsmatrix 84 hat in diesem Ausführungsbeispiel dieselbe Größe wie die zweite Signaturwertmatrix 82 und wird vor Beginn der Erstellung initialisiert (beispielsweise überall auf Null oder ‚leer' gesetzt). An der ermittelten Zielposition 88 in der Abstimmungsmatrix 84 wird dann - sofern diese gültig ist - in Verfahrensschritt 116 ein inkrementeller Wichtungswert 86 (bezeichenbar durch w') durch inkrementelles Zuordnen des Wichtungswerts 74 erhöht. Im weiteren Verlauf - vgl. Figur 4e zwei Zeilen und eine Spalte später - wird der Korrespondenz-Signaturwert 78 von ‚1' erreicht. An der entsprechenden Adresse 72 der Zuordnungsvorschrift 70 (vgl. Figur 4e) ist der relative Versatz 66 als (1;-1) und der Wichtungswert ‚3' hinterlegt. Damit ergibt sich in diesem Ausführungsbeispiel dieselbe Zielposition 88 in der Abstimmungsmatrix 84 wie zuvor bei dem Korrespondenz-Signaturwert 78 von '709'. Es wird nun also der bisher gespeicherte inkrementelle Wichtungswert 86 von ‚2' um ‚3' auf ‚5' erhöht (Wert ‚5' ist in Figur 4f dargestellt). Damit ist demonstriert, wie die erwartete relative Anordnung der Korrespondenz-Signaturwerte 78 (vergleiche die relative Anordnung der Signaturwerte ‚709' und ‚1' in Bezug auf die Zielposition 88 in Figur 4e mit der relativen Anordnung der gleichnamigen Signaturwerte 64 in Bezug auf die Referenzposition 60 in Figur 4a) zu einer Erhöhung des inkrementellen Wichtungswerts 86 führt, die schließlich zur gesuchten Position 58 führt. Es sei angemerkt, dass an Matrixelementen der zweiten Signaturwertmatrix 82 ohne gültigen Korrespondenz-Signaturwert 78 nichts weiter unternommen werden muss (als leere Felder dargestellt). Es ist ebenfalls denkbar, für derart ungültige Felder einen speziellen Signaturwert wie ‚-1', ‚0' oder ‚1024' vorzusehen.

Aufgrund von Quantisierungen auf ein Pixelraster, Rundungsungenauigkeiten, Interpolationsfehlern, Abstandsänderungen und Perspektivänderungen zwischen dem ersten Bildbereich 50 und dem Korrespondenz-Bild 52 kann es vorkommen, dass die inkrementellen Wichtungswerte 86, die idealerweise in einer Bildposition 80 (d.h. in einem Matrixelement) konzentriert sein müssten, auf mehrere benachbarte Bildpositionen 80 verstreut bzw. 'verschmiert' sind. Diese Streuung kann durch einen Nachverarbeitungsschritt wirksam kompensiert werden, beispielsweise durch Anwendung eines linearen und ortsinvarianten Glättungsfilters auf die Abstimmungsmatrix 84. Eine solche Filterung führt zum deutlicheren Herausarbeiten der zu suchenden lokalen Extrema 90, insbesondere Maxima, und kann die Suche erleichtern bzw. die Unsicherheit bei der Suche verringern, weil bei Betrachtung der Verhältnisse schwache Nebenextrema 92, insbesondere Nebenmaxima, tendenziell unterdrückt und die starke Extrema, insbesondere Maxima, tendenziell hervorgehoben werden.

Abschließend wird in Verfahrensschritt 118 die Position 58 (bezeichenbar als $(u_0,v_0)^*$) des ersten Bildbereichs 50 in dem Korrespondenz-Bild 52 durch Auffinden eines Extremums 90, insbesondere eines Maximums, in den inkrementellen Wichtungswerten 86 der Abstimmungsmatrix 84 ermittelt. Es sei angemerkt, dass auch die Abstimmungsmatrix 84 zu keinem Zeitpunkt explizit oder vollständig gespeichert vorliegen muss. Es kann ausreichend sein, Matrixelemente bzw. Abstimmungswerte für den "Gewinner" (globales Extremum bzw. Maximum) der Abstimmung und eventuell für einen zweiten, dritten "Gewinner" (lokale Extrema bzw. Maxima) usw. an eine weitere Auswertung, insbesondere einen weiteren Verfahrensschritt 120 der Auswertung, weiterzureichen. In der weiteren Auswertung kann beispielsweise geprüft werden, ob der inkrementelle Wichtungswert 86 oder die inkrementellen Wichtungswerte 86 für einen Gewinner eindeutig genug ist/sind und ob ein ausreichend signifikanter Abstand zu einem inkrementellen Wichtungswert 86 zu einer weiteren Bildposition 80 im Korrespondenz-Bild 52 vorliegt (d.h. zum zweiten "Gewinner"). Entsprechend wird die Position 58 des ersten Bildbereichs 50 in dem Korrespondenz-Bild 52 ermittelt, wenn der der Position 58 zugeordnete inkrementelle Wichtungswert 86 einen relativen oder absoluten Schwellwert erreicht.

Es sei angemerkt, dass die Abstimmungsmatrix 84 nicht vollständig gespeichert werden muss, es aber sinnvoll sein kann, denjenigen Teil im Speicher zu halten, auf dem noch Wichtungswerte 74 abgegeben werden können. Da die Vektoren $(\Delta u_j,\Delta v_j)$ des Versatzes 66 typischerweise nicht sehr lang sind, ist eine "Reichweite" bei der Abstimmung sehr begrenzt, sodass nur auf einem relativ schmalen Streifen der Abstimmungsmatrix 84 Wichtungswerte 74 abgegeben werden. Somit ist denkbar, denjenigen Teil der Abstimmungsmatrix 84, der nicht mehr in Reichweite der Abstimmung ist - d.h. der nicht mehr in Reichweite des Versatzes 66 ist -, bereits auszuwerten, sodass dieser anschließend nicht länger gespeichert werden muss.

In Figur 5 sind für die beispielhafte Messkonstellation der Figur 1 zwei Abstimmungsmatrizen 84a, 84b dargestellt. Dabei sind die inkrementellen Wichtungswerte 86 der jeweiligen Abstimmungsmatrix 84a, 84b als Grauwerte in einer bildlichen Darstellung wiedergegeben, wobei ein dunklerer Grauwert einem höheren Wert des zu Grunde liegenden inkrementellen Wichtungswerts 86 entspricht. Die Abstimmungsmatrix 84a in Figur 5a betrifft die Ermittlung der Position 58a des ersten Bildbereichs 50 im ersten Bild 24, während die Abstimmungsmatrix 84b in Figur 5b die Ermittlung der Position 58b des ersten Bildbereichs 50 im Korrespondenz-Bild 52 betrifft. Es ist gut zu erkennen, dass in der Abstimmungsmatrix 84a ein eindeutiges Extremum 90 vorliegt. In der Abstimmungsmatrix 84b zeigt sich ebenfalls ein klar ausgebildetes Extremum 90, das die Position 58b des ersten Bildbereichs 50 im Korrespondenz-Bild 52 kennzeichnet, wobei weitere Nebenextrema 92 schwächer sichtbar sind. Die Betrachtung der jeweiligen Werte unter Verwendung eines Schwellwerts macht es abschließend möglich, die Position 58b als globales Extremum zu identifizieren.

Es sei angemerkt, dass die Abstimmungsmatrix 84a in der Praxis nicht zwangsläufig benötigt wird. Es ist jedoch denkbar, die Abstimmungsmatrix 84a optional zu nutzen, um vorab (im selben Bild, d.h. im ersten Bild 24) festzustellen, ob es ungünstige Mehrdeutigkeiten gibt und wie nah diese einem richtigen Kandidaten kommen. Dieses Vorwissen könnte bei der späteren Auswertung des Korrespondenz-Bilds 52 verwendet werden, beispielsweise als Information wie ausgeprägt und wie nah ein zweiter "Gewinner" liegt und/oder ob ein zweiter "Gewinner" im Korrespondenz-Bild noch enthalten ist oder nicht.

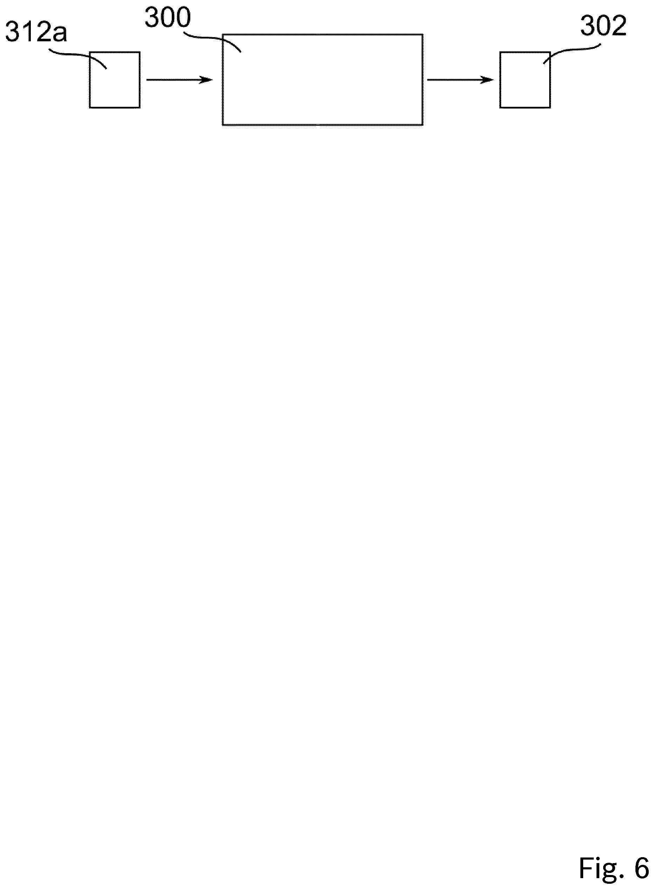

In Figur 6 ist ein SoC 300 zur Durchführung des erfindungsgemäßen Verfahrens 100 dargestellt. Der SoC 300 erfasst einen ersten Bildbereich 50 und ein Korrespondenz-Bild 52 unter Verwendung einer bildgebenden Sensorvorrichtung 312a des SoC 300. Der SoC 300 ist dazu eingerichtet, eine Position 58 des ersten Bildbereichs 50 in dem Korrespondenz-Bild 52 zu ermitteln und davon abhängig ein Ausgangssignal 302 zu erzeugen bzw. auszugeben.

**Patentansprüche**

1. Verfahren zum Ermitteln einer Position (58) eines ersten Bildbereichs (50) eines Ausgangsbilds (24) in einem Korrespondenz-Bild (52), umfassend zumindest die folgenden Verfahrensschritte:

   • Bereitstellen des ersten Bildbereichs (50) aus dem Ausgangsbild (24) umfassend zumindest eine Referenzposition (60), wobei die Referenzposition (60) beliebig gewählt ist,
   • Bereitstellen des Korrespondenz-Bildes (52),
   • Ermitteln einer Mehrzahl von Signaturwerten $s_i$ (64) zu verschiedenen Bildpositionen $(x_i,y_i)$ (62) im ersten Bildbereich (50), wobei ein Signaturwert $s_i$ (64) eine Umgebung einer Bildposition $(x_i,yi)$ (62) im ersten Bildbereich (50) charakterisiert und wobei eine Bildposition $(x_i,y_i)$ (62) einen relativen Versatz $(\Delta x_i,\Delta y_i) = (x_r,y_r) - (x_i,y_i)$ (66) bezüglich der Referenzposition $(x_r,y_r)$ (60) aufweist,

• Zuordnen von relativen Versatzen ($\Delta x_i, \Delta y_i$) (66) einer Mehrzahl von Bildpositionen ($x_i, y_i$) (62) im ersten Bildbereich (50) zu jeweilig ermittelten Signaturwerten $s_i$ (64) in einer Zuordnungsvorschrift (70), insbesondere in einer Lookup-Tabelle,

• Ermitteln einer Mehrzahl von Korrespondenz-Signaturwerten $s_j$ (78) zu verschiedenen Bildpositionen ($u_j, v_j$) (80) im Korrespondenz-Bild (52), wobei ein Korrespondenz-Signaturwert $s_j$ (78) eine Umgebung einer Bildposition ($u_j, v_j$) (80) im Korrespondenz-Bild (52) charakterisiert,

• Ermitteln von relativen Versatzen ($\Delta u_j, \Delta v_j$) (66) zu ermittelten Korrespondenz-Signaturwerten $s_i$ (78) unter Verwendung der Zuordnung und

• Berechnen von Zielpositionen ($u_0, v_0$) = ($u_j, v_j$) + ($\Delta u_j, \Delta v_j$) in dem Korrespondenz-Bild (52) durch Summation des relativen Versatzes ($\Delta u_j, \Delta v_j$) (66) und jeweiliger Bildposition ($u_j, v_j$) (80),

• inkrementelles Zuordnen eines Wichtungswerts w (74) zu einer berechneten Zielposition durch Auslesen aus der Zuordnungsvorschrift (70), wobei ein inkrementeller Wichtungswert w' (86) gebildet wird,

• Ermitteln der Position ($u_0, v_0$)* (58) im Korrespondenz-Bild (52), welche der Referenzposition ($u_r, v_r$) (58) im ersten Bildbereich (50) entspricht, durch Auffinden eines Extremums (90) in den inkrementellen Wichtungswerten w' (86).

2. Verfahren nach Anspruch 1, wobei die Mehrzahl von Signaturwerten $s_i$ (64) zu verschiedenen Bildpositionen ($x_i, y_i$) (62) im ersten Bildbereich (50) in Form einer Matrix oder Tabelle ermittelt wird und/oder wobei die Mehrzahl von Korrespondenz-Signaturwerten $s_j$ (78) zu verschiedenen Bildpositionen ($u_j, v_j$) (80) des Korrespondenz-Bildes (52) in Form einer Matrix oder Tabelle ermittelt wird.

3. Verfahren nach einem der vorhergehenden Ansprüche, wobei ein jeweiliger Signaturwert $s_i$ (64) eine Adresse (72) der Zuordnungsvorschrift (70), insbesondere der Lookup-Tabelle, festgelegt.

4. Verfahren nach einem der vorhergehenden Ansprüche, wobei ein Beschreiben der Zuordnungsvorschrift (70) folgende Schritte umfasst:

• Elementenweise und synchrone Iteration durch alle Matrixelemente einer 5 x 5 Matrixelemente großen Matrizen;

• Signaturwertmatrix (68), Matrix von relativen Versatzen (66) und Matrix von Wichtungswerten (74);

• Auslesen von Signaturwerten (64) aus der Signaturwertmatrix (68), von relativem Versatz (66) aus der Matrix der relativen Versatze (66) und Wichtungswert (74) aus der Matrix der Wichtungswerte (74);

• Springen an eine Adresse (72) der Zuordnungsvorschrift (70), die unter Verwendung des Signaturwerts (64) festgelegt ist, und Eintragen von relativem Versatz (66) sowie Wichtungswert (74);

5. Verfahren nach einem der vorhergehenden Ansprüche, wobei die Wichtungswerte w (74) zu Zielpositionen im Korrespondenz-Bild (52) in Form einer Matrix oder Tabelle zugeordnet werden.

6. Verfahren nach einem der vorhergehenden Ansprüche, wobei ein Korrespondenz-Signaturwert $s_j$ (78) zu einer Bildposition ($u_j, v_j$) (80) im Korrespondenz-Bild (52) analog gebildet wird, insbesondere nach derselben Vorschrift gebildet wird, wie ein Signaturwert $s_i$ (64) zu einer Bildposition ($x_i, y_i$) (62) im ersten Bildbereich (50).

7. Verfahren nach einem der vorhergehenden Ansprüche, wobei der zugeordnete Wichtungswert w (74) abhängig vom relativen Versatz ($\Delta u_j, \Delta v_j$) (66) gewählt wird, insbesondere mit zunehmendem relativen Versatz (66) zunimmt oder abnimmt.

8. Verfahren nach einem der vorhergehenden Ansprüche, wobei eine Position ($u_0, v_0$)* (58) des ersten Bildbereichs (50) in dem Korrespondenz-Bild (52) ermittelt wird, wenn der der Position (58) zugeordnete inkrementelle Wichtungswert w' (86) einen relativen oder absoluten Schwellwert erreicht.

9. Verfahren nach einem der vorhergehenden Ansprüche, wobei ein relativer Versatz ($\Delta u_j, \Delta v_j$) (66) zu ermittelten Korrespondenz-Signaturwerten $s_j$ (78) unter Verwendung der Zuordnung und einer Skalierungsgröße berechnet wird.

10. Verfahren nach einem der vorhergehenden Ansprüche, wobei Mehrdeutigkeiten in der Mehrzahl der ermittelten Signaturwerte $s_i$ (64) durch Löschen und/oder durch Zusammenfassen der mehrdeutigen Signaturwerte $s_i$ (64) behoben werden, wobei das Zusammenfassen durch ein gewichtetes Mitteln von relativen Versatzen (66) erfolgt.

**11.** Verfahren nach einem der vorhergehenden Ansprüche, wobei der erste Bildbereich (50) aus dem Ausgangbild (24) und/oder das Korrespondenz-Bild (52) unter Verwendung zumindest einer bildgebenden Sensorvorrichtung (12a) erfasst und bereitgestellt wird.

**12.** SoC (System-on-Chip), welcher dazu eingerichtet ist, ein Verfahren nach einem der Ansprüche 1 bis 11 durchzuführen, wobei der SoC (300) dazu eingerichtet ist, zumindest einen ersten Bildbereich (50) und ein Korrespondenz-Bild (52) zu erfassen und abhängig von der ermittelten Position $(u_0,v_0)^*$ (58) des ersten Bildbereichs (50) in dem Korrespondenz-Bild (52) ein Ausgangssignal (302) zu erzeugen.

**13.** Steuervorrichtung, eingerichtet zur Durchführung eines Verfahrens nach einem der Ansprüche 1 bis 11.

**14.** System umfassend zumindest eine Steuervorrichtung nach Anspruch 13 und mindestens eine bildgebende Sensorvorrichtung (12a), welche dazu eingerichtet ist, einen ersten Bildbereich (50) und ein Korrespondenz-Bild (52) zu erfassen und bereitzustellen.

**15.** Computerprogramm umfassend Befehle, welche bei ihrer Ausführung mittels einer Prozessorvorrichtung einer Steuervorrichtung die Steuervorrichtung veranlassen, ein Verfahren nach einem der vorherigen Ansprüche 1 bis 11 auszuführen.

**16.** Computerlesbares Speichermedium, auf dem ein Computerprogramm nach Anspruch 15 hinterlegt ist.

**Claims**

**1.** Method for determining a position (58) of a first image region (50) of an initial image (24) in a correspondence image (52), comprising at least the following method steps:

- providing the first image region (50) from the initial image (24) comprising at least one reference position (60), wherein the reference position (60) is arbitrarily selected,
- providing the correspondence image (52),
- determining a plurality of signature values $s_i$ (64) for different image positions $(x_i, y_i)$ (62) in the first image region (50), wherein a signature value $s_j$ (64) characterizes surroundings of an image position $(x_i, y_i)$ (62) in the first image region (50) and wherein an image position $(x_i, y_i)$ (62) has a relative offset $(\Delta x_i, \Delta y_i) = (x_r, y_r) - (x_i, y_i)$ (66) with respect to the reference position $(x_r, y_r)$ (60),
- assigning relative offsets $(\Delta x_i, \Delta y_i)$ (66) of a plurality of image positions $(x_i, y_i)$ (62) in the first image region (50) to respectively determined signature values $s_i$ (64) in an assignment specification (70), in particular in a lookup table,
- determining a plurality of correspondence signature values $s_j$ (78) for different image positions $(u_j, v_j)$ (80) in the correspondence image (52), wherein a correspondence signature value $s_j$ (78) characterizes surroundings of an image position $(u_j, v_j)$ (80) in the correspondence image (52),
- determining relative offsets $(\Delta u_j, \Delta v_j)$ (66) for determined correspondence signature values $s_j$ (78) using the assignment and
- calculating target positions $(u_0, v_0) = (u_j, v_j) + (\Delta u_j, \Delta v_j)$ in the correspondence image (52) by summation of the relative offset $(\Delta u_j, \Delta v_j)$ (66) and the respective image position $(u_j, v_j)$ (80),
- incrementally assigning a weighting value w (74) to a calculated target position by reading out from the assignment specification (70), wherein an incremental weighting value w' (86) is formed,
- determining the position $(u_0, v_0)^*$ (58) in the correspondence image (52) which corresponds to the reference position $(u_r, v_r)$ (58) in the first image region (50), by finding an extremum (90) in the incremental weighting values w' (86).

**2.** Method according to Claim 1, wherein the plurality of signature values $s_i$ (64) for different image positions $(x_j, y_j)$ (62) in the first image region (50) are determined in the form of a matrix or table and/or wherein the plurality of correspondence signature values $s_j$ (78) for different image positions $(u_j, v_j)$ (80) of the correspondence image (52) are determined in the form of a matrix or table.

**3.** Method according to either of the preceding claims, wherein a respective signature value $s_i$ (64) defines an address (72) of the assignment specification (70), in particular of the lookup table.

**4.** Method according to any of the preceding claims, wherein writing the assignment specification (70) comprises the following steps:

    • element-wise and synchronous iteration through all the matrix elements of a matrix with size 5 x 5 matrix elements;
    • signature value matrix (68), matrix of relative offsets (66) and matrix of weighting values (74);
    • reading out signature values (64) from the signature value matrix (68), relative offset (66) from the matrix of relative offsets (66) and weighting value (74) from the matrix of weighting values (74);
    • jumping to an address (72) of the assignment specification (70) which is defined using the signature value (64), and entering relative offset (66) and weighting value (74).

5. Method according to any of the preceding claims, wherein the weighting values w (74) are assigned to target positions in the correspondence image (52) in the form of a matrix or table.

6. Method according to any of the preceding claims, wherein a correspondence signature value $s_j$ (78) for an image position $(u_j,v_j)$ (80) in the correspondence image (52) is formed analogously to, in particular according to the same specification as, a signature value $s_i$ (64) for an image position $(x_i,y_i)$ (62) in the first image region (50).

7. Method according to any of the preceding claims, wherein the assigned weighting value w (74) is selected depending on the relative offset $(\Delta u_j,\Delta v_j)$ (66), in particular increases or decreases as the relative offset (66) increases.

8. Method according to any of the preceding claims, wherein a position $(u_0,v_0)^*$ (58) of the first image region (50) in the correspondence image (52) is determined if the incremental weighting value w' (86) assigned to the position (58) reaches a relative or absolute threshold value.

9. Method according to any of the preceding claims, wherein a relative offset $(\Delta u_j, \Delta v_j)$ (66) for determined correspondence signature values $s_j$ (78) is calculated using the assignment and a scaling variable.

10. Method according to any of the preceding claims, wherein ambiguities in the plurality of determined signature values $s_i$ (64) are eliminated by deleting and/or by merging the ambiguous signature values $s_i$ (64), wherein the merging is carried out by weighted averaging of relative offsets (66).

11. Method according to any of the preceding claims, wherein the first image region (50) from the initial image (24) and/or the correspondence image (52) are/is captured and provided using at least one imaging sensor device (12a).

12. SoC (System-on-Chip) configured to carry out a method according to any of Claims 1 to 11, wherein the SoC (300) is configured to capture at least one first image region (50) and a correspondence image (52) and to generate an output signal (302) depending on the determined position $(u_0,v_0)^*$ (58) of the first image region (50) in the correspondence image (52).

13. Control device configured to carry out a method according to any of Claims 1 to 11.

14. System comprising at least one control device according to Claim 13 and at least one imaging sensor device (12a) configured to capture and provide a first image region (50) and a correspondence image (52).

15. Computer program comprising instructions which, when executed by means of a processor device of a control device, cause the control device to carry out a method according to any of the preceding Claims 1 to 11.

16. Computer-readable storage medium on which a computer program according to Claim 15 is stored.

**Revendications**

1. Procédé pour déterminer une position (58) d'une première zone d'image (50) d'une image de départ (24) dans une image de correspondance (52), comprenant au moins les étapes de procédé suivantes :

    • fourniture de la première zone d'image (50) à partir de l'image de départ (24) comprenant au moins une position de référence (60), la position de référence (60) étant choisie arbitrairement,
    • fourniture de l'image de correspondance (52),

• détermination d'une multitude de valeurs de signature $s_i$ (64) pour différentes positions d'image $(x_i,y_i)$ (62) dans la première zone d'image (50), une valeur de signature $s_j$ (64) caractérisant un environnement d'une position d'image $(x_i,y_i)$ (62) dans la première zone d'image (50), et une position d'image $(x_i,y_i)$ (62) présentant un décalage relatif $(\Delta x_i, \Delta y_i) = (x_r,y_r) - (x_i,y_i)$ (66) par rapport à la position de référence $(x_r,y_r)$ (60),

• association de décalages relatifs $(\Delta x_i, \Delta y_i)$ (66) à une multitude de positions d'image $(x_i,y_i)$ (62) dans la première zone d'image (50) à des valeurs de signature $s_i$ (64) respectivement déterminées dans une règle d'association (70), en particulier dans un tableau de consultation,

• détermination d'une multitude de valeurs de signature de correspondance $s_j$ (78) pour différentes positions d'image $(u_j,v_j)$ (80) dans l'image de correspondance (52), une valeur de signature de correspondance $s_j$ (78) caractérisant un environnement d'une position d'image $(u_j,v_j)$ (80) dans l'image de correspondance (52),

• détermination de décalages relatifs $(\Delta u_j, \Delta v_j)$ (66) pour des valeurs de signature de correspondance $s_j$ (78) déterminées en utilisant l'association et

• calcul de positions cibles $(u_0,v_0) = (u_j,v_j) + (\Delta u_j, \Delta v_j)$ dans l'image de correspondance (52) par sommation du décalage relatif $(\Delta u_j, \Delta v_j)$ (66) et de la position d'image respective $(u_j,v_j)$ (80),

• association incrémentielle d'une valeur de pondération w (74) à une position cible calculée par lecture de la règle d'association (70), une valeur de pondération incrémentielle w' (86) étant obtenue,

• détermination de la position $(u_0,v_0)^*$ (58) dans l'image de correspondance (52), qui correspond à la position de référence $(u_r,v_r)$ (58) dans la première zone d'image (50), en trouvant un extremum (90) dans les valeurs de pondération incrémentielles w' (86).

2. Procédé selon la revendication 1, la multitude de valeurs de signature $s_i$ (64) pour différentes positions d'image $(x_j,y_j)$ (62) étant déterminée dans la première zone d'image (50) sous la forme d'une matrice ou d'un tableau et/ou la multitude de valeurs de signature de correspondance $s_j$ (78) pour différentes positions d'image $(u_j,v_j)$ (80) de l'image de correspondance (52) étant déterminée sous la forme d'une matrice ou d'un tableau.

3. Procédé selon l'une des revendications précédentes, une valeur de signature $s_i$ (64) fixant une adresse (72) de la règle d'association (70), en particulier du tableau de consultation.

4. Procédé selon l'une des revendications précédentes, une description de la règle d'association (70) comprenant des étapes suivantes :

• itération élémentaire et synchrone à travers tous les éléments de matrice d'une matrice dont la dimension est de 5 x 5 éléments de matrice ;

• matrice de valeurs de signature (68), matrice de décalages relatifs (66) et matrice de valeurs de pondération (74) ;

• lecture de valeurs de signature (64) à partir de la matrice de valeurs de signature (68), du décalage relatif (66) à partir de la matrice des décalages relatifs (66) et de la valeur de pondération (74) à partir de la matrice de valeurs de pondération (74) ;

• saut à une adresse (72) de la règle d'association (70), qui est fixée en utilisant la valeur de signature (64), et enregistrement d'un décalage relatif (66) et d'une valeur de pondération (74).

5. Procédé selon l'une des revendications précédentes, les valeurs de pondération w (74) étant associées à des positions cibles dans l'image de correspondance (52) sous la forme d'une matrice ou d'un tableau.

6. Procédé selon l'une des revendications précédentes, une valeur de signature de correspondance $s_j$ (78) étant obtenue de manière analogue à une position d'image $(u_j,v_j)$ (80) dans l'image de correspondance (52), en particulier étant obtenue selon la même règle, comme une valeur de signature $s_i$ (64) par rapport à une position d'image $(x_i,y_i)$ (62) dans la première zone d'image (50).

7. Procédé selon l'une des revendications précédentes, la valeur de pondération w (74) associée étant choisie en fonction du décalage relatif $(\Delta u_j, \Delta v_j)$ (66), en particulier augmentant ou diminuant au fur et à mesure que le décalage relatif (66) augmente.

8. Procédé selon l'une des revendications précédentes, une position $(u_0,v_0)^*$ (58) de la première zone d'image (50) dans l'image de correspondance (52) étant déterminée lorsque la valeur de pondération incrémentielle w' (86) associée à la position (58) atteint une valeur de seuil relative ou absolue.

9. Procédé selon l'une des revendications précédentes, un décalage relatif $(\Delta u_j, \Delta v_j)$ (66) par rapport à des valeurs de

signature de correspondance $s_j$ (78) déterminées étant calculé en utilisant l'association et une variable d'échelle.

10. Procédé selon l'une des revendications précédentes, des ambiguïtés dans la pluralité des valeurs de signature $s_i$ (64) déterminées étant éliminées par suppression et/ou combinaison des valeurs de signature ambiguës $s_i$ (64), la combinaison étant effectuée par calcul de la moyenne pondérée de décalages relatifs (66).

11. Procédé selon l'une des revendications précédentes, la première zone d'image (50) étant détectée et fournie à partir de l'image de départ (24) et/ou de l'image de correspondance (52) en utilisant au moins un dispositif de détection d'imagerie (12a).

12. SoC (système sur puce), qui est mis au point pour mettre en œuvre un procédé selon l'une des revendications 1 à 11, le SoC (300) étant mis au point pour détecter au moins une première zone d'image (50) et une image de correspondance (52) et pour générer un signal de départ (302) en fonction de la position déterminée $(u_0,v_0)^*$ (58) de la première zone d'image (50) dans l'image de correspondance (52).

13. Dispositif de commande, mis au point pour mettre en œuvre un procédé selon l'une des revendications 1 à 11.

14. Système comprenant au moins un dispositif de commande selon la revendication 13 et au moins un dispositif de détection d'imagerie (12a), qui est mis au point pour détecter et fournir une première zone d'image (50) et une image de correspondance (52).

15. Programme d'ordinateur comprenant des instructions qui, lorsqu'elles sont exécutées au moyen d'un dispositif processeur d'un dispositif de commande, amènent le dispositif de commande à exécuter un procédé selon l'une des revendications précédentes 1 à 11.

16. Support de stockage lisible par machine, sur lequel est stocké un programme informatique selon la revendication 15.

Fig. 1

(a)

(b)

Fig. 2

100

102 104

106

108

110

112

114

116

118

120

Fig. 3

**(a)**

**(b)**

Fig. 4a, b

**(c)**

74

| | | | | |
|---|---|---|---|---|
| 1 | 2 | 2 | 2 | 1 |
| 2 | 3 | 4 | 3 | 2 |
| 2 | 4 | 5 | 4 | 2 |
| 2 | 3 | 4 | 3 | 2 |
| 1 | 2 | 2 | 2 | 1 |

60

62,54

50

**(d)**

70

| $s$ | $(\Delta x, \Delta y)$ | $w$ |
|---|---|---|
| 0 | | |
| 1 | $(1, -1)$ | 3 |
| 707 | | |
| 708 | | |
| 709 | $(2, 1)$ | 2 |
| 709 | | |
| 710 | | |

72,64

74

66

Fig. 4c, d

**(e)**

82

66

74

$(\Delta x, \Delta y) = (2, 1), \ w = 2$

52

709

88

80,54

1

78

$(\Delta x, \Delta y) = (1, -1), \ w = 3$

66

**(f)**

84

52

80,54

5

88,86

Fig. 4e, f

**(a)**

**(b)**

Fig. 5

312a        300                              302

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10351778 A1
- WO 2005048195 A2
- DE 102010006522 A1
- DE 10356090 B3
- DE 102018201692 A1